(19) Europäisches Patentamt / European Patent Office / Office européen des brevets

(11) **EP 2 849 144 A1**

(12) **EUROPEAN PATENT APPLICATION**
published in accordance with Art. 153(4) EPC

(43) Date of publication:
**18.03.2015 Bulletin 2015/12**

(51) Int Cl.:
***G06Q 40/04*** (2012.01)

(21) Application number: **14754980.2**

(22) Date of filing: **13.03.2014**

(86) International application number:
**PCT/JP2014/056596**

(87) International publication number:
**WO 2014/156665 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2013 JP 2013064668**

(71) Applicants:
• **Aft Co. Ltd.**
**Tokyo 160-0023 (JP)**

• **Aideal Inc.**
**Tokyo 151-0053 (JP)**

(72) Inventor: **MIYASHIRO, Meigetsu**
**Tokyo 151-0053 (JP)**

(74) Representative: **Thibon, Laurent**
**Cabinet Beaumont**
**1, rue Champollion**
**38000 Grenoble (FR)**

(54) **FOREIGN EXCHANGE TRANSACTION DEVICE, FOREIGN EXCHANGE TRANSACTION SYSTEM, TRANSMISSION/RECEPTION METHOD, AND PROGRAM**

(57) To provide a foreign exchange transaction apparatus and the like, where foreign exchange transactions can be carried out with individual currency units.

A foreign exchange transaction apparatus having a control unit for processing information on a foreign exchange transaction of a plurality of currencies is provided with: a screen information generation unit 304 that, by means of the above described control unit, generates screen information for selecting one currency from among the plurality of currencies and placing a bundled order of transactions where the selected currency and the other currencies are exchanged, respectively; a communication unit 301 that transmits, by means of the above described control unit, the above described screen information generated by the screen information generation unit 304 to the outside; and a communication unit 301 that receives, by means of the above described control unit, order information on the above described bundled order from the outside.

FIG. 6

## Description

### Technical Field

The present invention relates to a foreign exchange transaction apparatus, a foreign exchange transaction system, a transmission/reception method and program.

### Background Art

A foreign exchange market exists wherein financial organizations, including banks, exchange foreign currencies they have on hand. Foreign exchange (FX: foreign exchange margin transaction) dealers are dealers that act as brokers between clients and the foreign exchange market. The FX dealers select in advance financial organizations (liquidity providers: LPs) that serve as sources that carry out foreign exchange transactions for them.

FX servers of FX dealers transmit foreign exchange rates of various currency pairs that are transmitted from the servers of the liquidity providers to a terminal apparatus of clients (see Patent Document 1). The clients refer to the foreign exchange rate of each currency pair that has been received by the terminal apparatus and designate the desired currency pair so as to transmit a purchase/sell order of the FX trade to the FX server of the FX dealer from the terminal apparatus (see Patent Document 2).

### Prior Art Documents

### Patent Documents

Patent Document 1: WO2010/058439
Patent Document 2: Japanese Unexamined Patent Publication 2009-217796

### Summary of the Invention

### Problem to be Solved by the Invention

However, novice FX clients are not very familiar with currency pairs and, thus, for them it is difficult to predict foreign exchange rates of a plurality of currency pairs. Therefore, a system for implementing FX trades using currency units that have been selected on the basis of the strength of individual currencies instead of the foreign exchange rates of currency pairs is desirable.

The present invention is provided in view of these circumstances. An object thereof is to provide a foreign exchange transaction apparatus and the like that can implement a foreign exchange transaction using individual currency units.

### Means for Solving Problem

The foreign exchange transaction apparatus according to the present invention is a foreign exchange transaction apparatus having a control unit for processing information on foreign exchange transactions of a plurality of currencies, and is characterized by being provided with: a generating unit generating, by means of the above described control unit, screen information for selecting a one currency from among a plurality of currencies and for placing a bundled order where the selected currency is exchanged with the other currencies respectively; a transmitting unit transmitting, by means of the above described control unit, the above described screen information generated by the generating unit to the outside; and a receiving unit receiving, by means of the above described control unit, order information on the above described bundled order from the outside.

### Effects of the Invention

The foreign exchange transaction apparatus and the like according to one aspect of the present invention can implement a foreign exchange transaction using individual currency units.

**Brief Description of the Drawings**

Fig 1 is a block diagram showing an example of the structure of an FX system;

Fig 2 is a block diagram showing an example of the structure of the hardware of an FX server;

Fig 3 is a block diagram showing an example of the structure of the hardware of a client terminal;

Fig 4A is a functional block diagram showing an example of the functional structure of an FX server;

Fig 4B is a functional block diagram showing an example of the functional structure of a client terminal;

Fig 5 is a flow chart showing an example of the procedure of an index calculating process;

Fig 6 is a diagram for illustrating an example of the screen layout of a transaction screen;

Fig 7 is a diagram for illustrating an example of the screen layout of a transaction screen in the state wherein the selected currency base button is being held down;

Fig 8 is a diagram for illustrating an example of the screen layout of a transaction screen in the state wherein the chart 2 button is being held down;

Fig 9 is a diagram for illustrating an example of the screen layout of a transaction screen in the state wherein the profit/loss button is being held down;

Fig 10 is a diagram for illustrating an example of the screen layout of a transaction screen in the state wherein the position button is being held down;

Fig 11 is a diagram for illustrating an example of the screen layout of a transaction screen in the state wherein the live report button is being held down;

Fig 12 is a flow chart showing an example of the procedure of the transaction process of an FX trade;

Fig 13 is a flow chart showing an example of the procedure of the transaction process of an FX trade;

Fig 14 is a flow chart showing an example of the procedure of the transaction process of an FX trade;

Fig 15 is a diagram for illustrating another example of the screen layout of a transaction screen in the state wherein the profit/loss button is being held down;

Fig 16 is a diagram for illustrating another example of the screen layout of a transaction screen in the state wherein the position button is being held down;

Fig 17 is a diagram for illustrating an example of the screen layout of a time setting screen;

Fig 18 is a flow chart showing an example of the procedure of the transaction process of an FX trade together with setting of date and time;

Fig 19 is a flow chart showing an example of the procedure of the transaction process of an FX trade together with setting of date and time;

Fig 20 is a flow chart showing an example of the procedure of the transaction process of an FX trade together with setting of date and time;

Fig 21 is a diagram for illustrating an example of the screen layout of an automatic account settlement screen;

Fig 22 is a flowchart showing an example of the procedure of an automatic account settlement process;

Fig 23 is a flowchart showing an example of the procedure of an automatic account settlement process; and

Fig 24 is a block diagram showing another example of the structure of the FX system.

**Preferred Embodiments of the Invention**

In the following the foreign exchange transaction system according to an embodiment of the present invention is described in detail in reference to the drawings. The foreign exchange transaction system according to the present embodiment is an FX system wherein the client margins money into the account of the FX (foreign exchange margin transaction) dealer.

Embodiment 1

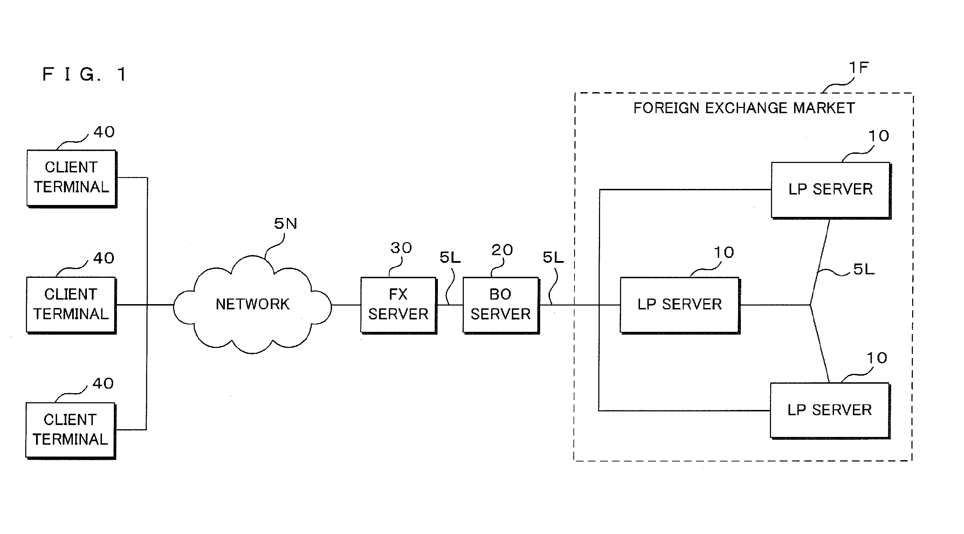

Fig 1 is a block diagram showing an example of the structure of an FX system 1. The FX system 1 includes a plurality of LP servers 10, a BO server (back office server) 20, an FX server (foreign exchange transaction apparatus, central apparatus) 30 and a plurality of client terminals (terminal apparatuses) 40. In the example in Fig 1, three LP servers 10 and three client terminals 40, respectively, are shown. However, the numbers of the LP servers 10 and the client terminals 40, respectively, may be a plurality of any number other than three. In addition, the number of LP servers 10 may be one.

The LP servers 10 are computers, such as mainframes or workstations. The LP servers 10 are connected to each other through dedicated lines 5L so that various types of information concerning foreign exchange transactions may be transmitted and received to and from each other. The group of LP servers 10 connected to each other form a foreign exchange market 1F. The LP servers 10 continuously transmit the foreign exchange rates (hereinafter referred to as exchange rates) of various currency pairs that change minute by minute to the BO server 20. The LP servers 10 receive an order of a foreign exchange transaction from the BO server 20 and transmit the transaction result to the BO server 20. The LP servers 10 are managed and operated by the liquidity providers.

The BO server 20 is a computer, such as a mainframe or a workstation. The BO server 20 is connected to the LP servers 10 and the FX server 30 through dedicated lines 5L. The BO server 20 receives the exchange rates from the LP servers 10 and transmits the received exchange rates to the FX server 30. In addition, the BO server 20 holds a group of tables for managing client margin information, account information, transaction history information and the like. The BO server 20 transmits the FX order that has been transmitted from the FX server 30 to the LP servers 10. The BO server 20 receives execution information on the FX order that has been placed, from an LP server 10 and carries out various types of information processes in regard to the FX trade on the basis of the received execution information. The information processes include processes for calculating margin balances, rate of margin usage and the like. In addition, the BO server 20 transmits the received execution information and the results of calculation to the FX server 30.

Thus, the BO server 20 intervenes between the LP servers 10 and the FX server 30 so as to transmit and receive exchange rates and FX order information. Here, the BO server 20 may be divided into a server having a function of transmitting and receiving exchange rates and a server for processing FX orders.

The BO server 20 may be managed and operated by an FX dealer, a person charged by the FX dealer, or another financial actor.

The FX server 30 is a computer, such as a mainframe or a workstation. The FX server 30 is connected to the LP servers 10 of the liquidity providers via the BO server 20 through dedicated lines 5L. The FX server 30 is connected to each client terminal 40 through a network 5N, such as the Internet, a telephone line, a satellite line or the like. The FX server 30 is managed and operated by the FX dealer.

The FX server 30 has a function as a Web (World Wide Web) server to the client terminals 40, and has a function as a server for transmitting and receiving foreign exchange transaction information to and from the LP servers 10 via the BO server 20. In addition, the FX server 30 has a function as an application server. Here the FX server 30 may be a system formed of a plurality of computers. As a result, the functions and the loads of the FX server 30 can be distributed.

The FX server 30 receives the exchange rates from the LP servers 10 via the BO server 20, and transmits and receives foreign exchange transaction information to and from the client terminals 40 using the received exchange rates. For example, the FX server 30 receives and FX order from a client terminal 40 and transmits the received order to an LP server 10 via the BO server 20.

In the following, the existence, the functions, and the operations of the BO server 20 are not described when not necessary. In the case wherein the FX server 30 receives the exchange rates from the LP servers 10 via the BO server 20, for example, the description is as follows: the FX server 30 receives the exchange rates from the LP servers 10.

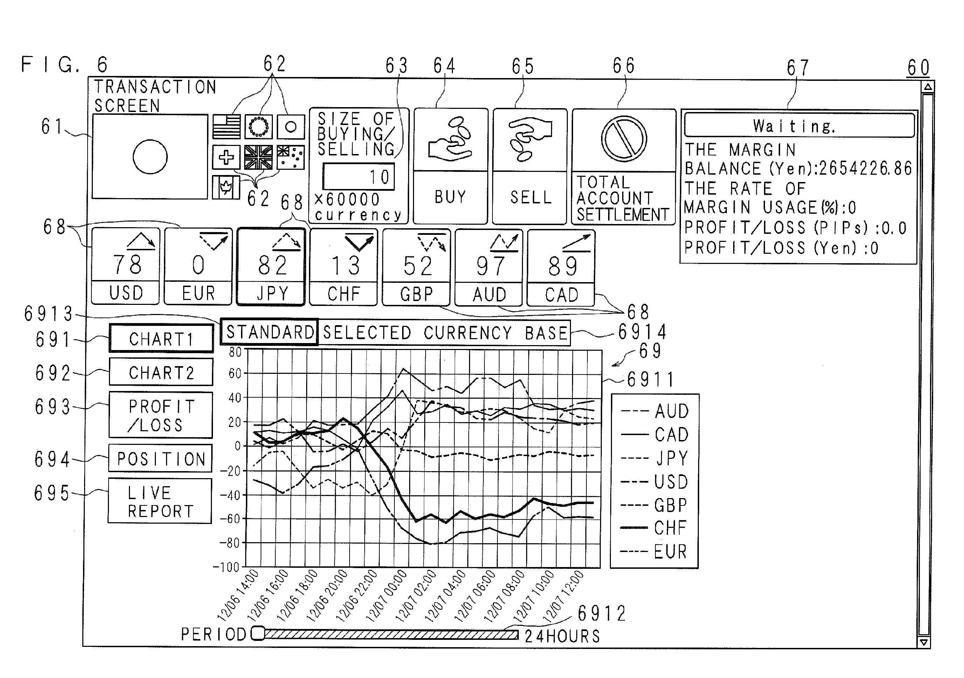

The client terminals 40 are desktop PCs (personal computers), notebook PCs, tablet PCs, smart phones and the like possessed by the client. The client terminals 40 are connected to the FX server 30 through the network 5N. An Internet browser (hereinafter referred to as a browser) has been installed in the client terminals 40. The client terminals 40 display a transaction screen 60 corresponding to the screen information transmitted from the FX server 30 (see Fig 6) on the browser screen. The client transmits an FX order to the FX server 30 from the client terminals 40 via the transaction screen 60. The client terminals 40 receive execution information, account settlement information and the like related to the FX order from the FX server 30. The client terminals 40 display the updated transaction screen 60 using the information received from the FX server 30.

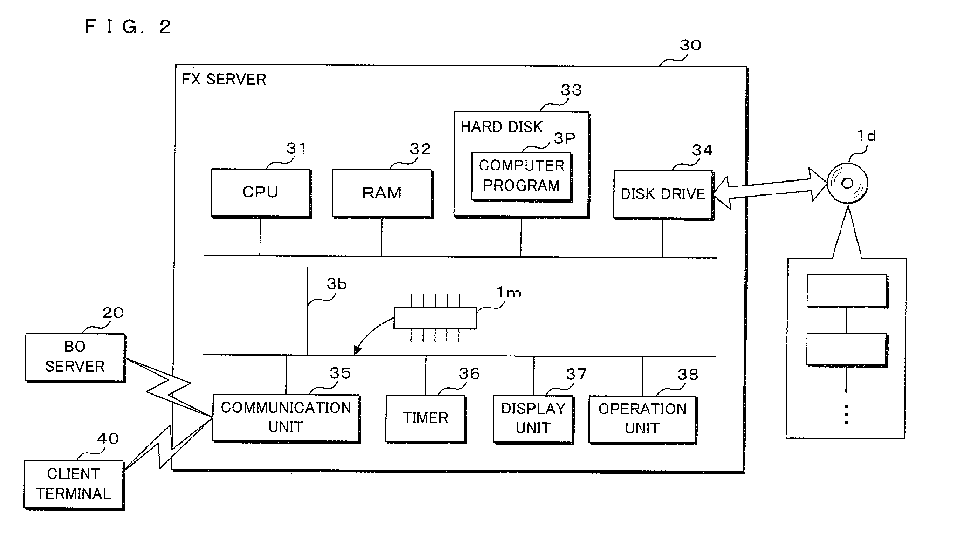

Fig 2 is a block diagram showing an example of the structure of the hardware of the FX server 30. The FX server 30 includes a CPU (Central Processing Unit) (control unit, generating unit, calculating unit, profit/loss calculating unit, bundled account settlement unit, process execution unit, central control unit) 31, a RAM (Random Access Memory) (storing unit) 32 and a hard disk (storing unit) 33. In addition, the FX server 30 includes a disk drive 34, a communication unit (transmitting unit, receiving unit, obtaining unit) 35, a timer (timing unit) 36, a display unit 37 and an operation unit 38. The components of the FX server 30 are connected to each other via a bus 3b.

The CPU 31 is a processor for controlling the components of the FX server 30. The CPU 31 reads out a program 3P stored in the hard disk 33 to the RAM 32 so that the program 3P is executed.

The RAM 32 is a main memory device. The RAM 32 temporarily stores operational parameters and other data required during the process of the CPU 31. Here, the RAM 32 may be substituted by a flash memory, a memory card or the like.

The hard disk 33 is an auxiliary memory device. The hard disk 33 stores various types of tables for managing the client information, the transaction account information, the transaction records and the like as well as the program 3P to be executed by the CPU 31. In addition, the hard disk 33 stores template files of various types of HTML files and various types of image files to be embedded in the Web screen. The hard disk 33 may be attached to the inside of the FX server 30 or may be placed outside of the FX server 30. Here, the hard disk 33 may be substituted by a flash memory that possesses a large information storage capacity, or an optical disc Id such as a CD (Compact Disc), a DVD (Digital Versatile Disc) or a BD (Blu-ray (registered trademark) Disc).

The disc drive 34 reads out information from the optical disc Id that is an external memory medium, and records information that has been read out onto the optical disc Id.

The communication unit 35 is a modem, a LAN (Local Area Network) card or the like. The communication unit 35 transmits and receives information to and from the LP servers 10 and the client terminals 40 via the dedicated lines 5L and the network 5N, respectively.

The timer 36 transmits the results of timekeeping to the CPU 31 as a signal.

The display unit 37 has a screen, such as a liquid crystal display or an organic EL (Electro-luminescence) display and displays various screens concerning the program 3P in accordance with instructions from the CPU 31.

The operation unit 38 is an input device, such as a keyboard, a mouse and a touch panel of the screen of the display unit 37, with which the user makes various types of inputs. The operation unit 38 generates an input signal based on the operations of the user. The generated input signal is outputted to the CPU 31 via the bus 3b.

Here, the CPU 31 may read in the program 3P from the optical disc Id via the disc drive 34. The CPU 31 may read in the program 3P from an external information processing apparatus or storage apparatus via the communication unit 35. Furthermore, a semiconductor memory 1m, such as a flash memory that stores the program 3P, may be mounted in the FX server 30.

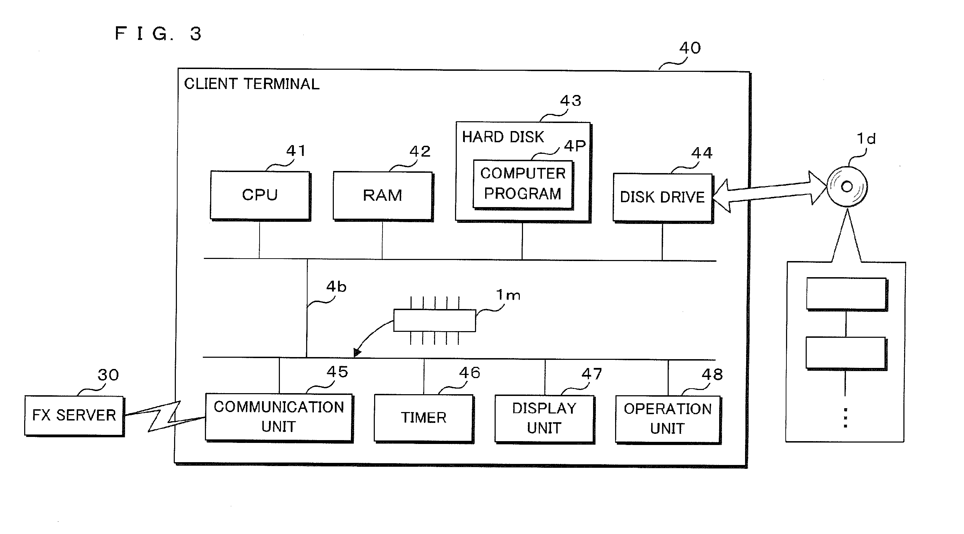

Fig 3 is a block diagram showing an example of the structure of the hardware of a client terminal 40. The client terminal 40 includes a CPU (terminal control unit, control unit) 41, a RAM 42, a hard disk 43, a disc drive 44, a communication unit (receiving unit, transmitting unit) 45, a timer 46, a display unit 47 and an operation unit 48. The components of the client terminal 40 are connected to each other via a bus 4b.

The CPU 41 is a processor for controlling the components of the client terminal 40. The CPU 41 reads out a program 4P stored in the hard disk 43 onto the RAM 42 and executes the program 4P. The program 4P includes a program for a browser, for example.

The RAM 42 is a main memory apparatus for temporarily storing operational parameters and other data required during CPU processing.

The hard disk 43 is an auxiliary memory device that stores the program 4P to be executed by the CPU 41.

The disc drive 44 reads out information from an optical disc Id, which is an external memory medium, and stores information that has been read out on the optical disc Id.

The communication unit 45 is a modem, a LAN card or the like. The communication unit 45 transmits and receives information to and from an FX server 30 via a network 5N.

The timer 46 transmits the results of timekeeping to the CPU 41 as a signal.

The display unit 47 displays various screens related to the program 4P in accordance with the instructions from the CPU 41. The display unit 47 displays a browser screen, for example.

The operation unit 48 is an input device, such as a keyboard, a mouse, and a touch panel of the screen of the display unit 47.

Here, the CPU 41 may read in the program 4P from the optical disc Id via the disc drive 44. The CPU 41 may read in the program 4P from an external information processing apparatus or storage apparatus via the communication unit 45. Furthermore, a semiconductor memory 1m, such as a flash memory, that stores the program 4P may be mounted inside of the client terminal 40.

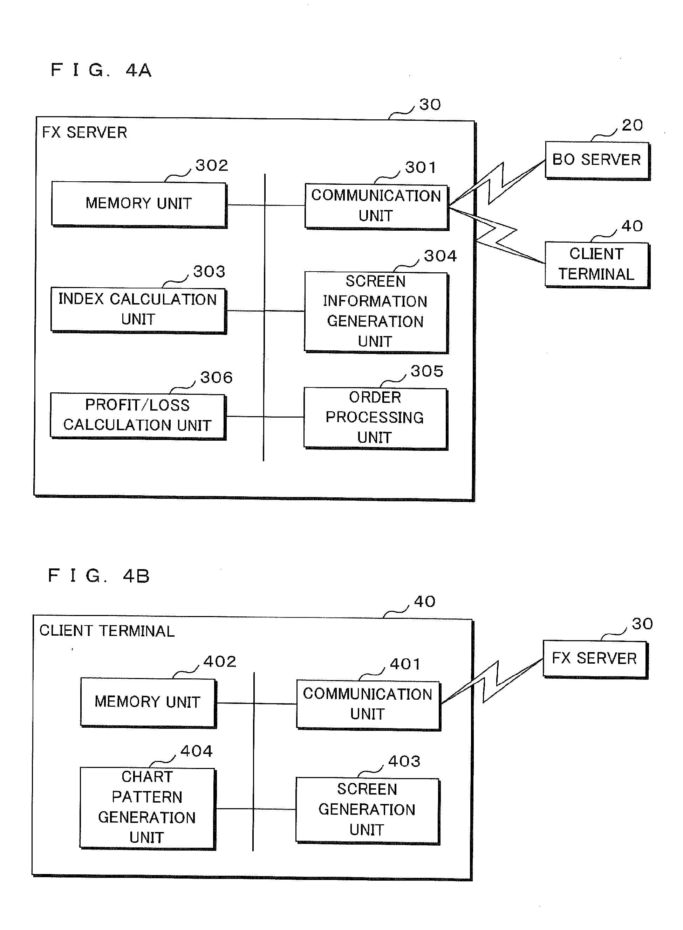

Fig 4A is a functional block diagram showing an example of the functional structure of the FX server 30. Fig 4B is a functional block diagram showing an example of the functional structure of the client terminal 40. Each functional unit in the FX server 30 is implemented when the program 3P stored in the hard disk 33 and the hardware resources, such as the CPU 31 and the RAM 32, operate in cooperation. Each functional unit in the client terminal 40 is implemented when the program 4P stored in the hard disk 43 and the hardware resources, such as the CPU 41 and the RAM 42, operate in cooperation.

The FX server 30 includes a communication unit (transmitting unit, receiving unit, obtaining unit) 301 and a memory unit 302.

The communication unit 301 is a functional structure unit that corresponds to the communication unit 35 of the hardware. The communication unit 301 receives the exchange rates of various currency pairs transmitted from the BO server 20. The memory unit 302 is a functional structure unit that corresponds to the RAM 32 and the hard disk 33. The memory unit 302 stores the exchange rates of the various pairs that the communication unit 301 has received from the BO server 20.

The FX server 30 includes an index calculation unit (calculating unit) 303. The index calculation unit 303 is a functional structure unit for calculating indices indicating the relative strengths of individual currencies. Here, the strength of an individual currency is the amount of fluctuation in the exchange rate of that target currency that has risen or fallen relative to a single or a plurality of other currencies during a specific period of time.

In the following, currencies of seven countries (including an economic union) are denoted by three-letter alphabetic codes. For example, Japanese yen is denoted by JPY, the U.S. dollar is denoted by USD, the Euro of the European Economic and Monetary Union is denoted by EUR, the British pound is denoted by GBP, the Swiss franc is denoted by CHF, the Australian dollar is denoted by AUD, and the Canadian dollar is denoted by CAD, respectively.

Here, the number of currencies handled by the FX system 1 is not limited to seven. The number of currencies handled by the FX system may be less than seven or may be more than seven. In the following, the embodiment is described by citing the above described seven currencies as examples. That is to say, the currency pairs that are handled are $_7C_2 = 21$.

The strength of JPY can be represented by the following formula (1), for example.

$$\text{The strength of JPY} = (\Delta \text{ vs. USD} + \Delta \text{ vs. EUR} + \Delta \text{ vs. GBP} + \Delta \text{ vs. CHF} + \Delta \text{ vs. AUD} + \Delta \text{ vs. CAD}) \div 6 \ldots (1)$$

Here, Δ vs. USD represents the strength of JPY vs. USD (amount of fluctuation in the exchange rate during a specific period of time). Δ vs. EUR represents the strength of JPY vs. EUR (amount of fluctuation in the exchange rate during a specific period of time). Δ vs. GBP and the other expressions represent the same as shown above.

The strength of USD can be represented by the following formula (2), for example.

$$\text{The strength of USD} = (\Delta \text{ vs. JPY} + \Delta \text{ vs. EUR} + \Delta \text{ vs. GBP} + \Delta \text{ vs. CHF} + \Delta \text{ vs. AUD} + \Delta \text{ vs. CAD}) \div 6 \ldots (2)$$

Here, Δ vs. JPY represents the strength of USD vs. JPY (amount of fluctuation in the exchange rate during a specific period of time). Δ vs. EUR represents the strength of USD vs. EUR (amount of fluctuation in the exchange rate during a specific period of time). Δ vs. GBP and the other expressions represent the same as shown above.

The strengths of EUR, GBP, CHF, AUD, and CAD can also be represented by formulas similar to formula (1) and formula (2).

The index calculation unit 303 in embodiment 1 represents the strength of individual currencies by indices using a common logarithm. In order to do so, the index calculation unit 303 calculates the strengths of individual currencies using the following formula (3), for example.

$$\text{Index} = (\Sigma\log(\text{exchange rate at the most recent point in time/exchange rate at the point in time of start of calculation})) \div \text{number of currency pairs being handled} \ldots (3).$$

Σ in formula (3) indicates that the values of the common logarithm of the ratio of each exchange rate, of which the number is equivalent to the number of currency pairs that are handled, are added to each other.

Concretely, the CPU 31 calculates the strength of each currency using each of the following formulas.

$$\text{The strength of JPY} = (\text{-}\log(\text{USDJPY}) \text{-} \log(\text{EURJPY}) \text{-} \log(\text{GBPJPY}) \text{-} \log(\text{CHFJPY}) \text{-} \log(\text{AUDJPY}) \text{-} \log(\text{CADJPY})) \div 6$$

$$\text{The strength of USD} = (\text{-}\log(\text{USDJPY}) \text{-} \log(\text{EURUSD}) \text{-} \log(\text{GBPUSD}) \text{-} \log(\text{USDCHF}) \text{-} \log(\text{AUDUSD}) \text{-} \log(\text{USDCAD})) \div 6$$

$$\text{The strength of GBP} = (\text{- log(GBPJPY)} \cdot \text{log(GBPUSD)} \cdot$$
$$\text{log(EURGBP)} \cdot \text{log(GBPCHF)} \cdot \text{log(GBPAUD)} \cdot \text{log(GBPCAD)}) \div 6$$

$$\text{The strength of CHF} = (\text{- log(CHFJPY)} \cdot \text{log(USDCHF)} \cdot$$
$$\text{log(EURCHF)} \cdot \text{log(GBPCHF)} \cdot \text{log(AUDCHF)} \cdot \text{log(CADCHF)}) \div 6$$

$$\text{The strength of AUD} = (\text{- log(AUDJPY)} \cdot \text{log(AUDUSD)} \cdot$$
$$\text{log(EURAUD)} \cdot \text{log(GBPAUD)} \cdot \text{log(AUDCHF)} \cdot \text{log(AUDCAD)}) \div 6$$

$$\text{The strength of CAD} = (\text{- log(CADJPY)} \cdot \text{log(USDCAD)} \cdot$$
$$\text{log(EURCAD)} \cdot \text{log(GBPCAD)} \cdot \text{log(CADCHF)} \cdot \text{log(AUDCAD)}) \div 6$$

Here, log(USDJPY) indicates the following:

$$\text{log(USDJPY)} = \text{log(USDJPY2/USDJPY1)},$$

wherein

USDJPY1 = exchange rate at the point in time of start of calculation for the currency pair USD/JPY and
USDJPY2 = exchange rate at the most recent point in time for the currency pair USD/JPY.
log(EURJPY), log(GBPJPY) and other expressions are used in the same way as the above log(USDJPY).

The method for representing an exchange rate includes a method for representing the amount of yen that is equivalent to one U.S. dollar and a method for representing the amount of U.S. dollars that is equivalent to one yen, for example. The exchange rates represented by the two methods of representation are in an inverse relationship to each other. However, there is a customary practice wherein either of these two methods of representation is used for the exchange rate for each currency pair. Therefore, the above described formulas are adjusted with +/- so that the common logarithmic value indicates an increment relative to the currency even in the case wherein the method for representing the exchange rate is used according to the customary practice.

For example, log(USDJPY) = log(USDJPY2/USDJPY1) is an increment of USD relative to JPY and, therefore, is added in the formula for finding the strength for USD but is subtracted in the formula for finding the strength of JPY. That is to say, the subtraction of log(USDJPY) is equivalent to the addition of log(JPYUSD).

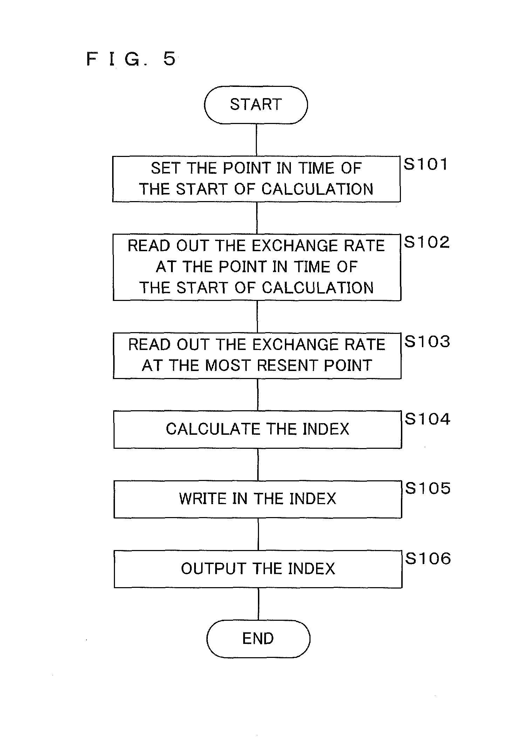

Fig 5 is a flow chart showing an example of the procedure of an index calculation process. Here, the CPU 31 stores the exchange rates continuously received from the LP servers 10 via the BO server 20 in the RAM 32 or the hard disk 33.

The CPU 31 sets the point in time of the start of calculation for an index (step S101). The point in time of the start of calculation for an index includes a point in time before a specific period of time before the most recent time and a fixed point in time for the day. The point in time before a specific period of time before the most recent time is a point in time that is twenty four hours, six hours or 30 minutes before the present time, for example. The fixed point in time for the day is the point in time when the foreign exchange market opens or, for example, 17:00 (United States Eastern Standard Time) when the New York market closes. In step S101, the CPU sets a plurality of points in time of start of calculation that have been determined in advance.

The CPU 31 reads out the exchange rate of each currency pair at each point in time of the start of calculation from the RAM 32 or the hard disk 33 (step S102). The CPU 31 reads out the exchange rate at the most recent point in time from the RAM 32 or the hard disk 33 (step S103). The CPU 31 calculates the index for each currency on the basis of formula (3) using the exchange rate that has been read out in step S102 and the exchange rate that has been read out in step S103 (step S104).

Here, in step S104, the CPU 31 calculates the indices of each currency, of which the number is the same as the number of the points in time of the start of calculation that have been set in step S101. In step S103 the CPU 31 may acquire the exchange rate at the most recent point in time directly from the communication unit 35 instead of reading it out from the RAM 32 or the hard disk 33.

The CPU 31 writes in the index of each currency that has been calculated to the RAM 32 and/or hard disk 33 (step S105). The CPU 31 outputs the index of each currency that has been calculated to the screen information generation unit (generating unit) 304 (step S106) and completes the processing.

The CPU 31 repeats the index calculation process shown in Fig 5 at an interval of a specific amount of time (interval of two seconds, 30 seconds, one minute, or five minutes, for example) on the basis of the timekeeping of the timer 36.

Here, the CPU 31 may first execute step S103 and, after that, may execute step S101 and step S102. In this case, the point in time a specific period of time before the most recent point in time, which is the point in time of the start of calculation for the index, is the point in time 24 hours, six hours, or 30 minutes before the point in time that corresponds to the exchange rate that has been read out in step S103.

Returning to Figs 4A and 4B, a description is continued. The FX server 30 includes the screen information generation unit (generating unit) 304.

The screen information generation unit 304 is a functional structure unit for generating data to be returned as a response in the case wherein the communication unit 301 receives a data request for updating the Web screen from the client terminal 40. The screen information generation unit 304 reads out the index that has been calculated by the index calculation unit 303 from the memory unit 302 and receives the most recent index from the index calculation unit 303. The screen information generation unit 304 may or may not edit the acquired index in accordance with the format with which the client terminal 40 will carry out processing. The communication unit 301 transmits the data generated by the screen information generation unit 304 to the client terminal 40.

The FX server 30 includes an order processing unit (a bundled account settlement unit, a process implementation unit) 305 and a profit/loss calculation unit 306. The order processing unit 305 is a functional structure unit for processing the FX order that has been transmitted from the client terminal 40.

Here, the FX orders to be processed by the order processing unit 305 include bundled buy/sell transactions in regard to six types of currency pairs. The currency pairs of the bundled buy/sell transactions handled by the FX system 1 inevitably include the currency selected by the client as one of the currencies to be exchanged. The set of the buy/sell transactions that are carried out for the six types of currency pairs made up of the currency selected by the client and each of the other six currencies is hereinafter referred to as a transaction group. The client who is in the act of dealing in currencies due to the generation of one transaction group holds positions for six currency pairs. In addition, the positions of the six currency pairs corresponding to the transaction group are regarded as being contained in a virtual basket and the transaction group is hereinafter also referred to as a basket transaction.

The order processing unit 305 accepts the FX order transmitted from the client terminal 40 via the communication unit 301. The order processing unit 305 transmits the accepted FX order to an LP server 10 via the BO server 20. The order processing unit 305 accepts execution information on the FX order transmitted from an LP server 10 via the BO server 20 and outputs the accepted execution information to the screen information generation unit 304 and the profit/loss calculation unit 306.

The profit/loss calculation unit 306 is a functional structure unit for managing profit/loss of the FX for each client. The profit/loss calculation unit 306 calculates the profit/loss of the client for each of the six types of currency pairs included in the basket transaction whenever an FX trade transaction is carried out. In addition, the profit/loss calculation unit 306 calculates the total amount of money of the entire profit/loss involving the six types of currency pairs for each basket transaction. Furthermore, profit/loss calculation unit 306 calculates the margin balance and the rate of margin usage of the client whenever an FX trade is carried out. The profit/loss calculation unit 306 outputs the calculated profit/loss and the like to the screen information generation unit 304. Here, the profit/loss calculation unit 306 calculates the profit/loss taking into consideration the fluctuation in exchange rate, the quantity of transactions, the various types of fees and the like as factors for calculation.

Here, the BO server 20 may have the functions of the profit/loss calculation unit 306. In this case the FX server 30 receives the results of calculation of profit/loss from the BO server 20 and transmits the received results profit/loss to the client terminal 40.

The screen information generation unit 304 generates data for displaying the updated transaction screen 60 on which the execution information, the profit/loss and the like that have been accepted, respectively, from the order processing unit 305 and the profit/loss calculation unit 306 are displayed. The screen information generation unit 304 transmits the generated data to the client terminal 40 in the case wherein a data request for displaying the updated transaction screen 60 is received from the client terminal 40. The client terminal 40 displays the updated transaction screen 60 on the display unit 47 using the data received from the FX server 30.

The client terminal 40 includes a communication unit 401, a memory unit 402, a screen generation unit 403 and a chart pattern generation unit 404.

The communication unit 401 is a functional structure unit corresponding to the communication unit 45 of the hardware. The communication unit 401 receives information concerning the HTML files, the CSS (Cascading Style Sheets), script programs and the FX trade and indices that indicate the strengths of individual currencies from the FX server 30. The memory unit 402 is a functional structure unit corresponding to the RAM 42 and the hard disk 43. The memory unit 402 stores various types of information that the communication unit 401 has received from the FX server 30 and data generated by the client terminal 40.

The screen generation unit 403 is a functional structure unit for generating the transaction screen 60 to be displayed on the display unit 47. The screen generation unit 403 receives an HTML file from the FX server 30 and displays the transaction screen 60 that corresponds to the received HTML file on the display unit 47. In addition, the screen generation unit 403 transmits a request for transmitting the data required for generating a predetermined region on the transaction screen 60 to the FX server 30 via the communication unit 401 at intervals of a predetermined amount of time on the basis of the timekeeping of the timer 46 or whenever necessary. The screen generation unit 403 generates a transaction screen 60 using the data (indices indicating the strengths of individual currencies, for example) received from the FX server 30 in the case wherein such data has been received.

The chart pattern generation unit 404 is a functional structure unit for generating a chart pattern that is gained by classifying the charts for indicating the fluctuation of the index of each currency. The chart pattern generation unit 404 accepts the indices of individual currencies from the screen generation unit 403. The chart pattern generation unit 404 prepares a schematic chart pattern from the fluctuation of the received index of each currency and outputs the prepared schematic chart pattern to the screen generation unit 403. The screen generation unit 403 uses the chart pattern of each currency that has been generated by the chart pattern generation unit 404 as a portion of an icon (information symbolizing diagram) that forms the transaction screen 60.

Next, the operation of the FX system 1 is described in reference to the actual transaction screen 60 displayed on the display unit 47 of the client terminal 40.

Fig 6 is a diagram for illustrating an example of the screen layout of the transaction screen 60. The transaction screen 60 is a screen for placing bundled orders for the transactions where one currency selected by the client from among seven currencies in reference to the indices indicating the strength of the individual currencies and the other six currencies are exchanged. That is to say, the transaction screen 60 is a screen for the client to select one currency and to input and transmit an order for an FX trade. Therefore, the client can implement an FX trade without being aware of the currency pairs involved and with the feeling of buying or selling the one selected currency.

The CPU 31 of the FX server 30 transmits the HTML files, the CSS, and the script programs for the transaction screen 60 to the client terminal 40 in the case wherein the authentication process has been completed when the client inputs his or her user ID and password to the login screen (not shown).

Here, the CPU 31 transmits an error screen for displaying a pop-up message saying "Please confirm the user name and password." to the client terminal 40 in the case wherein the user ID and the password used during the authentication process differ from the user ID and the password that have been registered in advance. In the case wherein the OK button is clicked on the error screen, the CPU 41 of the client terminal 40 transmits a request for transmitting the login screen to the FX server 30. The CPU 31 of the FX server 30 again transmits a login screen to the client terminal 40.

The CPU 41 of the client terminal 40 receives an HTML file or the like from the FX server 30 in the case wherein the authentication process was successful and displays the transaction screen 60 in a browser screen displayed on the display unit 47 on the basis of the received HTML file or the like.

Here, the program 4P stored on the hard disk 43 of the client terminal 40 includes a script program that the client terminal 40 has downloaded from the FX server 30.

The transaction screen 60 includes a selected currency label 61, currency selection buttons 62, a currency amount text box 63, a buy button 64, a sell button 65, a total account settlement button 66, a transaction status label 67, selected currency icons 68 and an FX information area 69. The selected currency label 61 is an icon for showing the national flag corresponding to the selected currency or an image of the European Union flag.

The currency selection buttons 62 are controls for selecting one currency that will be exchanged with the other six currencies. The FX system 1 deals with seven currencies, for example, and, therefore, seven currency selection buttons 62 are displayed on the transaction screen 60. The currency selection buttons 62 are shown as national flags and the European Union flag corresponding, respectively, to the seven currencies that may be selected.

The currency amount text box 63 is a control for inputting the amount of currency to be handled. In the FX system 1, the buying and selling of the six currencies other than the selected one currency vis-à-vis the selected currency are carried out in a bundled manner wherein the amount of the unit of transaction in each currency pair is 10,000 units, for example. Therefore, the actual amount of the transaction is 60,000 times greater than the amount of currency inputted in the currency amount text box 63.

The buy button 64 is a control for implementing an order of buying the selected one currency by selling the other six currencies in real time and in a bundled manner. The sell button 65 is a control for implementing an order of selling the one selected currency by buying the other six currencies in real time and in a bundled manner. The total account settlement button 66 is a control for implementing closed trade relative to the respective positions within the basket transaction of the client in real time and in a bundled manner. The total account settlement button 66 displays a symbol that is similar to a traffic sign meaning stop, for example.

The transaction status label 67 is a control for displaying the transaction status of the FX trade. A letter string saying "Standby" or "Transaction in Progress" is displayed in the top portion of the transaction status label 67. Before the transaction of the FX trade and the after the total account settlement, a letter string saying "Standby" is displayed in the transaction status label 67. In the case wherein the client holds positions for the FX trade, the CPU 31 of the FX server 30 sets a letter string saying "Transaction in Progress" in the transaction status label 67. Fig 6 illustrates a standby state.

In the middle to lower portion of the transaction status label 67, the margin balance, the rate of margin usage and the profit/loss are displayed from top to bottom. The margin balance and the rate of margin usage concerning the transaction status are recalculated by the BO server 20 whenever a transaction is executed. Then, the CPU 31 receives the results of recalculation by the BO server 20 from the BO server 20. The CPU 31 generates data for displaying a new transaction screen 60 on the client terminal 40 (including profit/loss) on the basis of the data received from the BO server 20. The CPU 31 transmits the data (the data generated by the CPU 31 and the data received from the BO server 20) to the client terminal 40. The CPU 41 of the client terminal 40 uses the data received from the FX server 30 in order to display the updated transaction screen 60 on the display unit 47. In the example in Fig 6 the margin balance is shown in yen, the rate of margin usage is shown in %, and the profit/loss is shown in PIPs and yen, respectively. The PIP is the minimum unit of fluctuation of the exchange rate.

The selected currency icons 68 are controls for displaying the selected currency with highlighting in the case wherein one currency that will be exchanged with the other six currencies, respectively, is selected by means of a currency selection button 62. The FX system 1 deals with seven currencies, for example, and therefore, seven selected currency icons 68 are displayed on the transaction screen 60. The selected currency icons 68 include an approximate fluctuation of the index for indicating the strength of each currency, the most recent index, and a three-letter alphabetic code indicating the type of currency.

In the case where a transaction concerning FX trade is carried out, the client selects one currency and presses, clicks, or taps the currency select button 62 corresponding to the selected currency. In the following, press is selected for the operations of buttons for the description. In the case where one currency select button 62 is pressed, the CPU 41 highlights the portion around the selected currency icon 68 corresponding to the currency select button 62 that has been pressed. The CPU 41 displays in the selected currency label 61 an image of the national flag or the European Union flag corresponding to the currency select button 62 that has been pressed. In addition, the CPU 41 sets a currency corresponding to the currency select button 62 that has been pressed as the currency that will be exchanged with the other six currencies, respectively. Fig 6 illustrates a case where JPY has been selected.

In the case where the client presses the buy button 64 in the state where JPY has been selected in Fig 6, the CPU 41 of the client terminal 40 transmits an order to sell the six currencies, USD, EUR, CHF, GBP, AUD, and CAD and buy one currency JPY to the FX server 30. In the case where the client presses the sell button 65 in the state where JPY has been selected in Fig 6, the CPU 41 of the client terminal 40 transmits an order to sell one currency JPY and buy the six currencies, USD, EUR, CHF, GBP, AUD, and CAD to the FX server 30.

In the case where the client sells a foreign currency in the state where the client does not have the foreign currency, the FX trade is made possible by loaning the foreign currency from an FX dealer with the margin money as collateral.

The FX information area 69 is a screen region that includes a child screen for displaying the transaction information of an FX trade. The transaction information are, for example, a chart showing indices of the strengths of the individual currencies concerning the profit/loss of each of the six currencies relative to the selected currency, the position of each of the six currencies relative to the selected currency, and animated images showing the profit/loss of each of the six currencies relative to the selected currency. Buttons for switching the displays of the above described various types of information are arranged in series to the left of the child screen in the FX information area 69.

The FX information area 69 includes a chart 1 button 691, a chart 2 button 692, a profit/loss button 693, a position button 694, and a live report button 695. The chart 1 button 691 and the chart 2 button 692 are controls for displaying a chart of indices indicating the strength of the individual currencies on the child screen. The profit/loss button 693 is a control for displaying the profit/loss of each of the six currencies relative to the selected currency on the child screen. The position button 694 is a control for displaying the position of each of the six currencies relative to the selected currency on the child screen. The live report button 695 is a control for displaying an animated image of the profit/loss of each of the six currencies relative to the selected currency on the child screen.

Fig 6 illustrates the state where the chart 1 button 691 has been pressed. The child screen to the right of the chart 1 button 691 displays a chart 6911 of the indices calculated by the CPU 31 in the FX server 30 using the exchange rates at the point in time, a specific amount of time, before the most recent point in time as the point in time of the start of calculation for calculating the indices showing the strengths of the individual currencies. The lateral axis of the chart 6911 indicates the time. The longitudinal axis of the chart 6911 indicates the indices. The chart 6911 is generated on the basis of the indices that the CPU 41 of the client terminal 40 has received from the FX server 30.

A legend of the lines for drawing a chart for the seven currencies is shown to the right of the chart 6911. For example, AUD corresponds to a thin, one-dotted chain line; CAD corresponds to a thin, solid line; JPY corresponds to a thin, broken line; USD corresponds to a thick, one-dotted chain line; GBP corresponds to a thick, broken line; CHF corresponds to a thick, solid line; and EUR corresponds to a thick, two-dotted chain line, respectively.

Fig 6 illustrates a chart 6911 of the indices that have been calculated using the point in time 24 hours earlier as the point in time of the start of calculation. For example, the index of each currency at 12/07 12:00 shows the relative amount of fluctuation in the exchange rate between 12/07 12:00 and 12/06 12:00. In addition, the index of each currency at 12/07 10:00 shows the relative amount of fluctuation in the exchange rate between 12/07 10:00 and 12/06 10:00.

In the chart 6911, the indices are converted appropriately (for example, converted by multiplying a proportionality constant). As a result, the chart 6911 is displayed as being expanded to the full width between the top and the bottom of the child screen in the FX information area 69 so that the seven currencies can be easily compared in the chart.

Here, the indices displayed in the selected currency icons 68 are numerals that have been corrected by the CPU 41 of the client terminal 40 using the most updated indices in the chart 6911 so that the index of the weakest currency is 0. For example, the most updated index of EUR is approximately -60 in Fig 6, and therefore, the currency selection buttons 62 show a correction index gained by adding approximately 60 to the most updated index of each currency.

As a result, the selected currency icons 68 show indices that are 0 or positive values, and therefore, the client can easily understand the strengths of the individual currencies.

Rough fluctuations of the indices displayed in the selected currency icons 68 are chart patterns that are gained by classifying the fluctuations of the indices of the individual currencies in the chart 6911. The bars above or below the chart patterns correspond to the level 0 index in the chart 6911.

The CPU 41 of the client terminal 40 generates the chart patterns to be displayed in the currency select buttons 62 as follows. The CPU 41 divides the most recent 24 hours into four time blocks: 12 hours from the point in time 24 hours earlier to the point in time 12 hours earlier; 6 hours from the point in time 12 hours earlier to the point in time 6 hours earlier; 3 hours from the point in time 6 hours earlier to the point in time 3 hours earlier; and 3 hours from the point in time 3 hours earlier to the current time. The CPU 41 calculates and samples a representative index value of each currency in each time block from among the four divided blocks. The representative value is an average value, a mean value, a maximum value, a minimum value or the like. The CPU 41 selects the chart patterns that are the closest to the fluctuations of the four representative values from among the chart patterns that have been received from the FX server 30 in advance by means of pattern recognition. The CPU 41 determines the selected chart patterns as rough fluctuations in the indices to be displayed in the currency select buttons 62. The chart patterns that have been received from the FX server 30 in advance are monotonous rising, monotonous falling, V-shaped, inverse V-shaped, N-shaped, inverse N-shaped, W-shaped, inverse W-shaped and the like, which are stored in the hard disk 43.

As a result, the client can understand the rough fluctuations in the currencies at a glance. The closer to the current time a representative value of an index is, the shorter the interval between the points in time during which the index represents the fluctuation is. Therefore, the chart patterns are generated by placing more importance on the movement of the current value, and thus are appropriate in the FX trade concerning the exchange rates that fluctuate minute by minute.

Though a certain period of time has been divided into four blocks in the above, the number of divisions may naturally be smaller than four or may be greater than four. In addition, the chart buttons that have been prepared in advance may include a head-and-shoulder(s) shape, an inverted head-and-shoulder(s) shape and the like, and an auxiliary line, such as a support line or a resistance line, may be added to a chart pattern.

In the above, the CPU 41 selects chart patterns that are the closest to the fluctuations in the four representative values by means of pattern recognition from among the chart patterns that have been stored in the hard disk 33 in advance. However, the CPU 41 may approximate the fluctuations in the indices of each currency during each time block from among the time blocks that have been divided into four to a line or a curve using the least square approximation, for example, and may link the approximated lines or curves to each other so that simplified chart patterns are generated in an animated manner.

A start point slider 6912 that runs in an approximately horizontal direction is displayed beneath the chart 6911. The start point slider 6912 is a control for changing the point in time of the start of calculation for the chart 6911. In the example in Fig 6, the knob of the start point slider 6912 is located to the far left. In the case where the knob is moved to the right little by little, the chart 6911 is sequentially switched to the chart 6911 of the indices calculated by using the point in time, such as six hours before or 30 minutes before, as the point in time of the start of calculation.

In the case where the knob of the start point slider 6912 is moved to the location where the point in time of the start of calculation corresponds to the point in time six hours earlier, for example, the index of each currency at 12/07 12:00 is switched to the amount of fluctuation in the exchange rate between 12/07 12:00 and 12/07 06:00. In addition, the index of each currency at 12/07 10:00 is switched to the amount of fluctuation in the exchange rate between 12/07 10:00 and 12/07 04:00.

A standard button 6913 and a selected currency base button 6914 are displayed to the upper left of the chart 6911. The standard button 6913 and the selected currency base button 6914 are controls for switching the display mode of the chart 6911. The default setting of the transaction screen 60 is a state where the standard button 6913 has been selected.

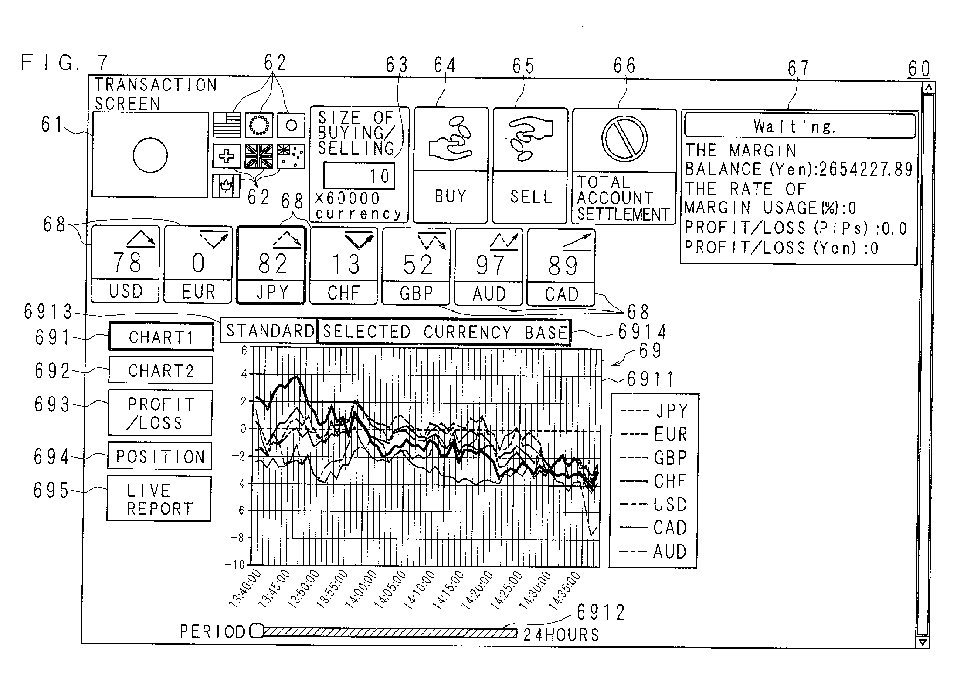

Fig 7 is a diagram for illustrating an example of a screen layout of the transaction screen 60 in such a state that the selected currency base button 6914 has been pressed. Fig 7 shows the state of the transaction screen 60 in such a state that the selected currency base button 6914 has been pressed on the transaction screen 60 in Fig 6. In the case where the selected currency base button 6914 has been pressed, the graph of the currency (JPY, for example) selected by the currency select button 62 is displayed as a bar that is approximately horizontal so that the index thereof is constantly zero. In addition, the graphs of the other six currencies are displayed as being shifted downwards or upwards relative to that of the selected currency so that the difference between the two is maintained.

As a result, the client can understand the fluctuations of the other six currencies relative to the selected currency at a glance.

In the case where the selected currency base button 6914 has been pressed as well, the chart 6911 is switched to the chart 6911 of the indices when the point in time of the start of calculation has been changed when the knob of the start point slider 6912 is moved.

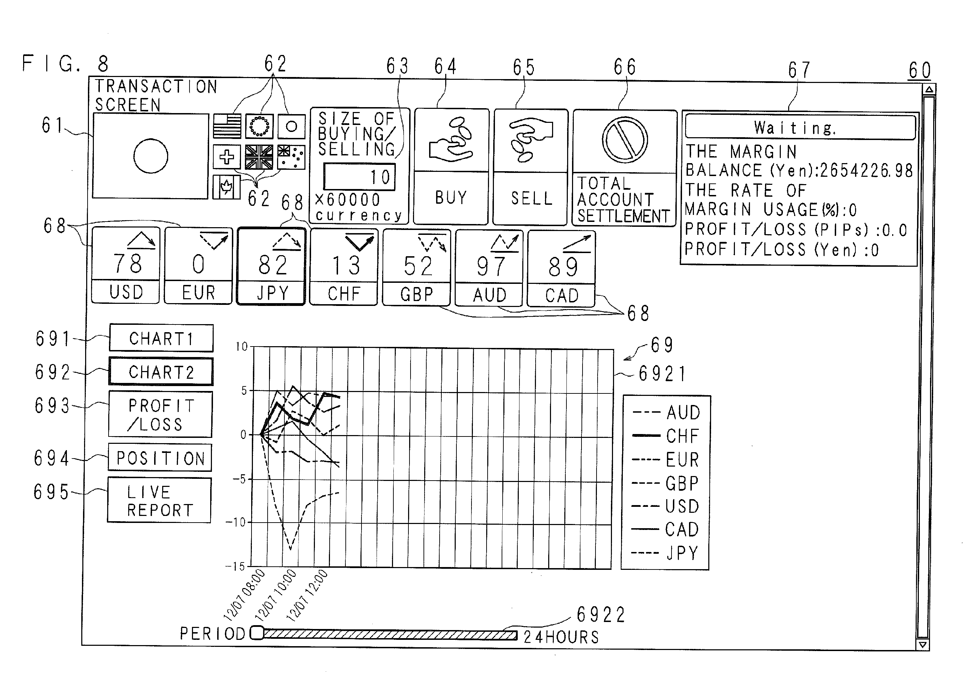

Fig 8 is a diagram for illustrating an example of the screen layout of the transaction screen 60 in such a state where the chart 2 button 692 has been pressed. Fig 8 shows the state of the transaction screen 60 in such a state that the chart 2 button 692 has been pressed on the transaction screen 60 in Fig 6. A chart 6921 of indices calculated by using the exchange rates at a fixed point in time that has been decided for the day as the point in time of the start of calculation for calculating the indices showing the strength of the individual currencies is shown in the child screen to the right of the chart 2 button 692. The lateral axis of the chart 6921 shows the time. The longitudinal axis of the chart 6921 shows the indices.

A legend of lines for drawing the graphs of the respective currencies is displayed to the right of the chart 6921 in the same manner as in the chart 6911.

Fig 8 illustrates the chart 6921 of the indices calculated by using the time 17:00 (United States Eastern Standard Time) when the New York market closes as the point in time of the start of calculation, for example. The index of each currency at 12/07 13:00 indicates the relative amount of fluctuation in the exchange rate between 12/07 13:00 and 12/07 08:00. In addition, the index of each currency at 12/07 10:00 indicates the amount of fluctuation in the exchange rate between 12/07 10:00 and 12/07 08:00.

The point in time of the start of calculation for calculating the indices shown in the chart 6921 is fixed, and therefore, the period of time for calculating the indices fluctuates as the time elapses from the point in time of the start of calculation. Meanwhile, the period of time for calculating the indices shown in the chart 6911 is fixed to 24 hours, 6 hours or the like. Therefore, the point in time of the start of calculation for calculating the indices shown in the chart 6911 differs depending on the point in time at which the indices are calculated.

A display period of a slider 6922 that runs in an approximately horizontal direction is shown beneath the chart 6921. The display period of the time slider 6922 is a control for changing the period of time during which the chart 6921 is displayed dating back to the past from the current time. In Fig 8, the knob of the display period of the time slider 6922 is located to the far left corresponding to the previous 24 hours. In the case where the knob is moved little by little to the right, the display period of time of the chart 6921 is sequentially switched from 24 hours in the past to 6 hours, 30 minutes or the like. In the case where the display period of time of the chart 6921 is sequentially switched from 24 hours in the past to 6 hours, 30 minutes or the like, for example, the chart 6921 is sequentially switched to that of the graphs drawn using the indices of a one-hour unit, a ten-minute unit, or a one-minute unit, respectively.

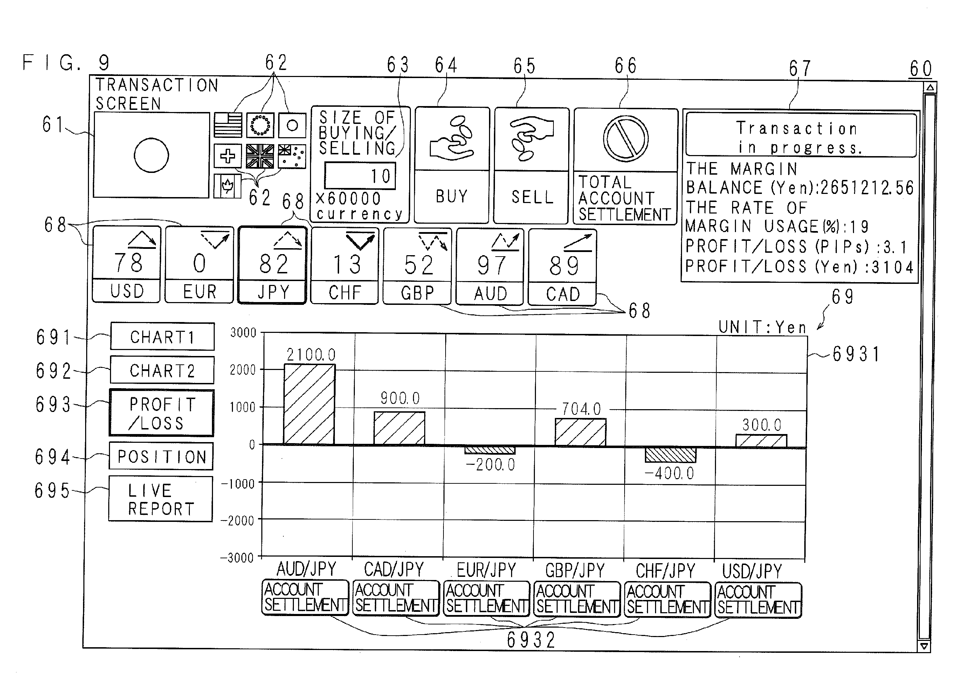

Fig 9 is a diagram for illustrating an example of the screen layout of the transaction screen 60 in such a state where the profit/loss button 693 has been pressed. Fig 9 shows the profit/loss of a basket transaction in the case where JPY has been selected and the sell button 65 has been pressed, for example. In the case where the client has a sell position, the transaction screen 60 in Fig 9, for example, is displayed in the display unit 47 of the client terminal 40. The transaction status label 67 displays a letter screen saying, "Transaction in progress." In addition, the transaction status label 67 displays the updated and most recent status of the margin balance and the like that have been recalculated.

In the FX system 1, the fact that JPY has been selected and a transaction of selling JPY has been carried out means that a transaction of selling JPY and buying AUD, CAD, EUR, GBP, CHF, and USD has been carried out. That is to say, a transaction concerning six types of currency pairs has been carried out. The FX information area 69 in Fig 9 displays the profit/loss in each currency pair included in the basket transaction in a bar graph 6931 with the Yen unit. The bar graphs 6931 that extend above the lateral line indicating zero Yen show the size of the profit (+), and the bar graphs 6931 that extend below the lateral line show the size of the loss (-). A currency pair for the FX trade is displayed beneath each bar graph 6931.

The FX server 30 constantly receives the exchange rate of each currency pair that changes minute by minute from an LP server 10. The CPU 31 in the FX server 30 repetitively carries out a profit/loss calculation process for calculating the profit/loss in each position concerning a basket transaction using the most recent exchange rate that has been received in the case where the client has a position for the basket transaction. Then, the CPU 31 generates data for the client terminal 40 to repetitively update and generate the transaction screen 60 on the basis of the calculated profit/loss.

The CPU 41 of the client terminal 40 transmits a data request for updating the transaction screen 60 to the FX server 30 at intervals of a specific amount of time. The CPU 31 of the FX server 30 repetitively transmits the data for updating and generating the transaction screen 60 to the client terminal 40 whenever the data is requested from the client terminal 40. The CPU 41 generates the bar graphs 6931 and updates and displays the transaction screen 60 that includes the bar graphs 6931 in the display unit 47 in the case where data related to the profit/loss has been received from the FX server 30. Therefore, the length and the plus/minus of each bar graph 6931 displayed in the display unit 47 of the client terminal 40 fluctuate minute by minute. Thus, the bar graphs 6931 displayed on the transaction screen 60 are updated by the CPU 31 of the FX server 30 and the CPU 41 of the client terminal 40 at intervals of a specific amount of time, such as two seconds or one minute.

The client can settle all the accounts of the six positions for selling JPY at the current time in a bundled manner by pressing the total account settlement button 66. An account settlement button 6932 is shown below the currency pair that is shown beneath each bar graph 6931. The account settlement buttons 6932 are controls for individually settling the account for the transaction of each currency pair included in the basket transaction. The client can confirm a profit or a loss in each of the six positions by pressing the account settlement button 6932 corresponding to the currency pair. In the case where the client presses the total account settlement button 66 or an account settlement button 6932, the contents in the transaction status label 67 are updated to the transaction status that reflects the results of the total account settlement or an individual account settlement, respectively.

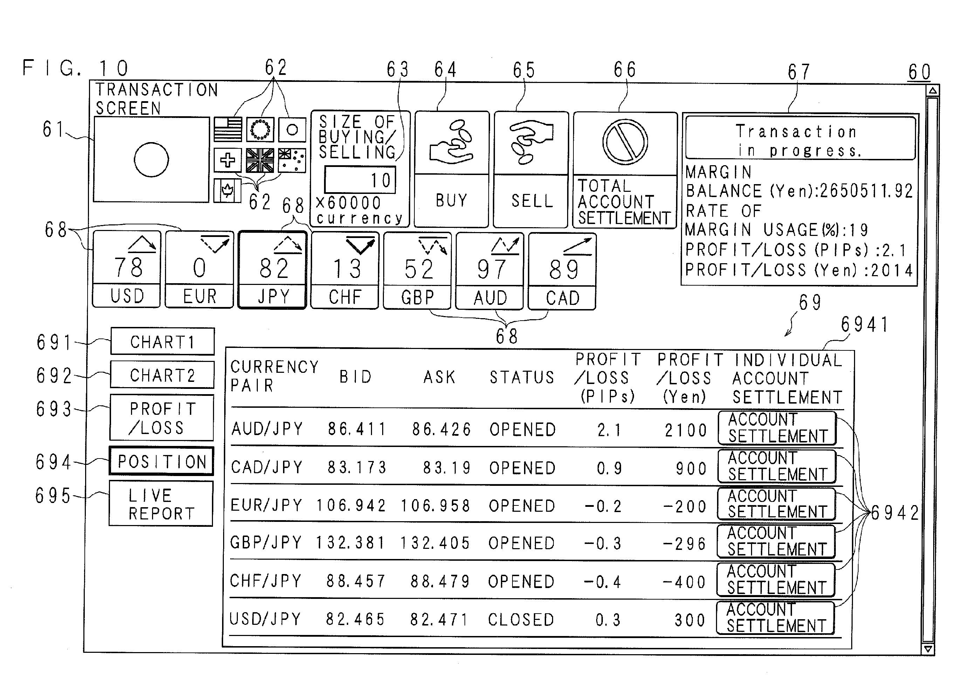

Fig 10 is a diagram for illustrating an example of the screen layout of the transaction screen 60 in such a state that the position button 694 has been pressed. Fig 10 shows the positions in a table format in the case where JPY has been selected and the sell button 65 has been pressed, for example. In the case where the client has a sell position, the transaction screen 60 in Fig 10, for example, is displayed on the display unit 47 of the client terminal 40. The transaction status label 67 displays a letter string saying, "Transaction in progress." In addition, the transaction status label 67 displays the updated and most recent status of the margin balance and the like that have been recalculated by the BO server 20. The FX information area 69 in Fig 10 displays a position table 6941. The position table 6941 shows information on the positions of the respective currency pairs in the FX trade that has been carried out by the client.

The position table 6941 includes columns for currency, bid, ask, status, profit/loss (PIPs), profit/loss (Yen), and individual account settlement. The currency column shows the currency pairs that are the basis of the respective positions. The bid column shows the values of the currency to be sold. The ask column shows the values of the currency to be bought. The status column shows the status of each position, where letter strings saying, "Opened" (account has not yet been settled) or "Closed" (account has been settled). Fig 10 illustrates a case where the position of the currency pair USD/JPY is closed and the positions of the other currency pairs are opened. The profit/loss (PIPs) column and the profit/loss (Yen) column show the numeric values indicating the profit/loss of each currency pair using the PIPs and yen as the unit, respectively. The bid, ask, profit/loss (PIPs), and profit/loss (Yen) columns displayed on the transaction screen 60 are updated by the CPU 31 in the FX server 30 and the CPU 41 in the client terminal 40 with intervals of two seconds, for example.

The individual account settlement column contains account settlement buttons 6942 that are controls for individually settling the accounts in the position of each currency pair included in the basket transaction. The functions of the account settlement buttons 6942 are the same as those of the account settlement buttons 6932 in Fig 9. In the case where the client presses the total account settlement button 66 or an account settlement button 6932, the contents in the transaction status label 67 and in the position table 6941 are updated to the transaction status that reflects the results of the total account settlement or an individual account settlement, respectively.

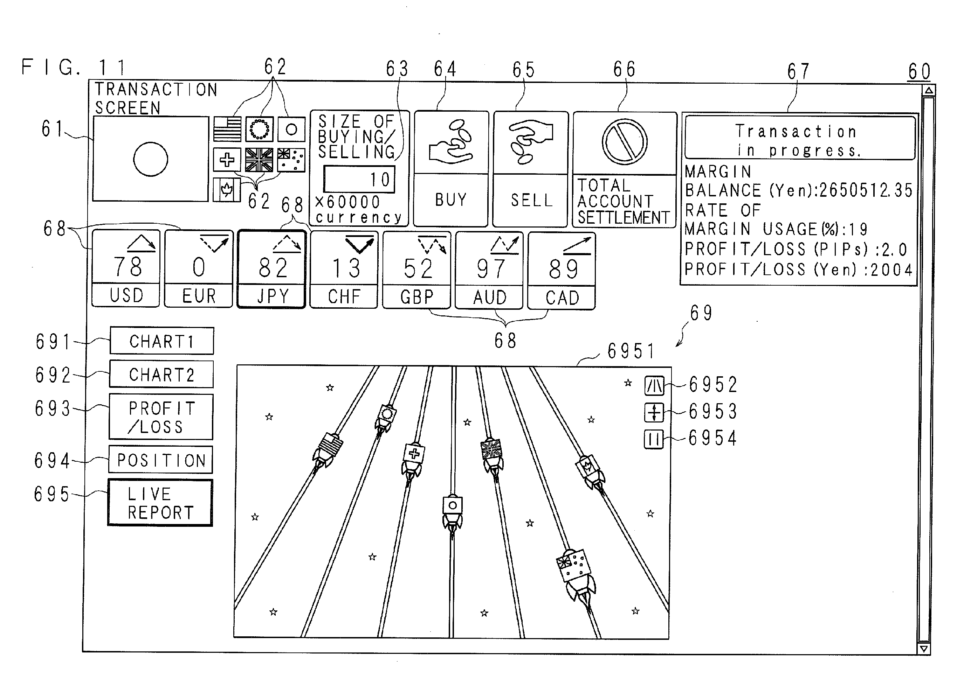

Fig 11 is a diagram for illustrating an example of the screen layout of the transaction screen 60 in such a state that the live report button 695 has been pressed. Fig 11 shows the profit/loss as an animated image in the case where JPY has been selected and the sell button 65 has been pressed, for example. In the case where the client has a sell position, the transaction screen 60 in Fig 11, for example, is displayed on the display unit 47 in the client terminal 40. Therefore, the transaction status label 67 displays a letter string saying, "Transaction in progress." In addition, the transaction status label 67 displays the updated and most recent status of the margin balance and the like that have been recalculated by the BO server 20 and the FX server 30.

An animated screen 6951 is displayed on the child screen in the FX information area 69 in Fig 11. The animated screen 6951 shows the profit/loss in each currency pair included in the basket transaction in a position of the race participants along the competition lane. In the example in Fig 11, the profit/loss in each currency pair is compared to the position of each rocket in the rocket race. The seven types of currencies to be handled are shown as the rocket icons on which the flag corresponding to each currency is attached.

In the center lane, the rocket icon corresponding to JPY, for example, that has been selected by the client is displayed. In the other lanes, the rocket icons corresponding to the other six types of currencies are displayed. The profit/loss in each currency pair is expressed by the distance between the location of the JPY rocket in its lane and the location of the other currency rocket in its lane. Since the exchange rate changes minute by minute, the location of the other currency rocket relative to the JPY rocket changes minute by minute.

Three icons for changing the display mode of the animated image are displayed in series in a vertical direction in the upper right portion of the animated screen 6951. These three icons are a lane display icon 6952, a direction changing icon 6953, and a stop icon 6954 from top to bottom, respectively.

The lane display icon 6952 has such a function as to display or not display the lane along which each rocket progresses. Fig 11 illustrates the state where the lanes are displayed. The direction changing icon 6953 has such a function as to reverse the direction in which all the rockets progress. The stop icon 6954 has such a function as to stop the movement of the animation.

In the case where the cursor is moved to the location of the rocket icon corresponding to a currency pair, the CPU 41 displays the profit/loss information related to the currency pair as a pop up. Likewise, in the case where the cursor is moved to the location of the rocket icon corresponding to a currency pair, the CPU 41 displays an account settlement button (not shown) having the same function as the account settlement buttons 6932 and 6942 so that an individual account can be settled for the position of the currency pair.

The animated image displayed on the animated screen 6951 is updated by the CPU 31 in the FX server 30 and the CPU 41 in the client terminal 40 at intervals of two seconds, for example. In addition, the CPU 41 in the client terminal 40 directs each rocket icon to vibrate along the lane at intervals of an amount of time that is shorter than two seconds, for example, in accordance with the script program that has been transmitted from the FX server 30. The display in the transaction status label 67 is updated in the same manner as the display in the transaction screen 60 in Fig 9 and the like.

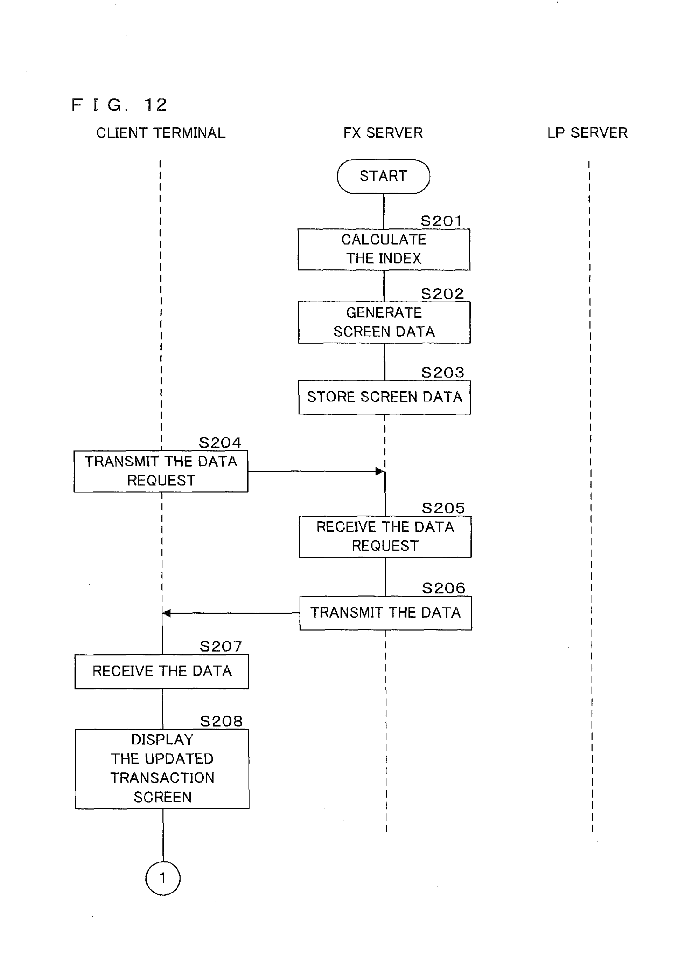

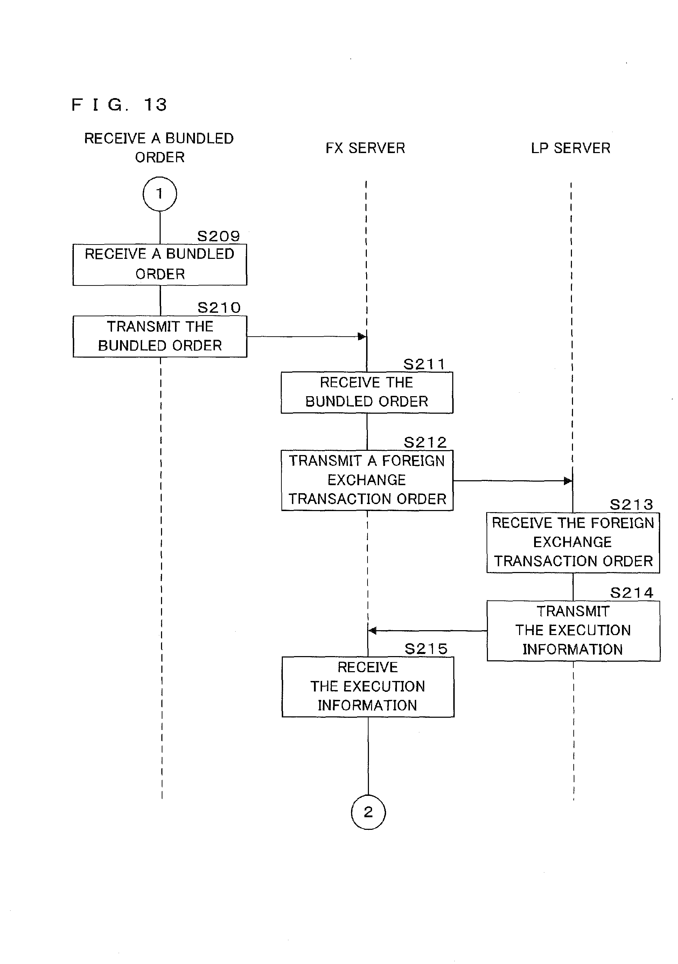

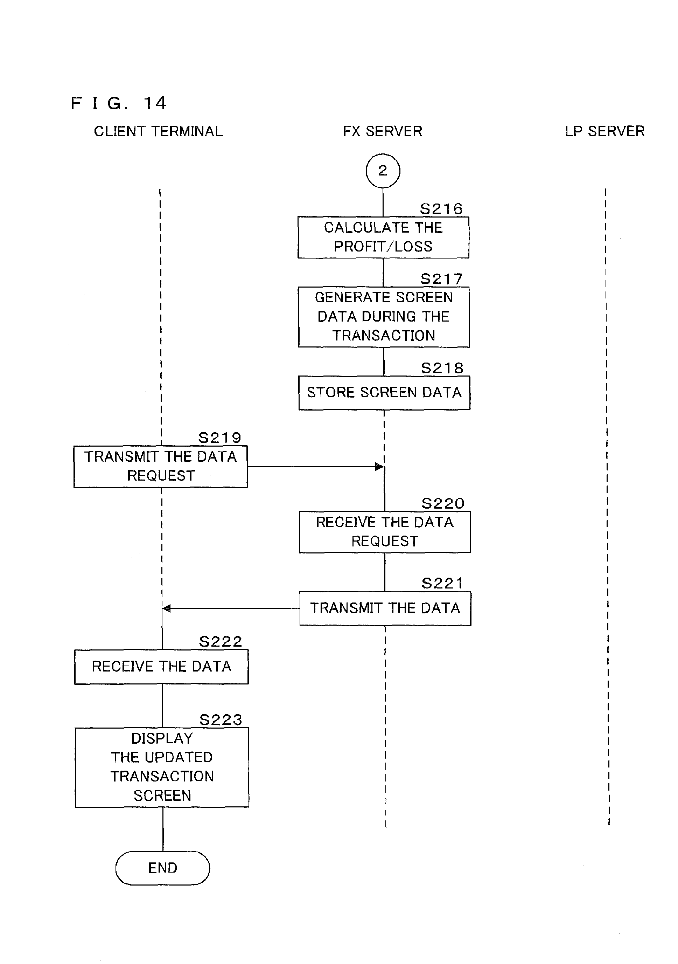

Figs 12, 13, and 14 are flow charts showing an example of a procedure for the transaction process of the FX trade. Figs 12, 13, and 14 show a procedure for the transaction process of the FX trade after the authentication process. In Figs 12, 13, and 14, the process in the BO server 20 that intervenes between an LP server 10 and the FX server 30 is not shown. Here, the CPU 41 in the client terminal 40 deploys in the RAM 42 the HTML file and various types of image files of the transaction screen 60 that has been received from the FX server 30 after logging in as preprocessing before the process in Figs 12, 13, and 14.

The CPU 31 in the FX server 30 carries out the index calculation process shown in Fig 5 (step S201). The CPU 31 generates data for updating the transaction screen 60 while standing by in which the chart 6911 is incorporated (step S202). In the step S202, the data generated by the CPU 31 includes the calculated index and the margin balance and the rate of margin usage that have been calculated by the BO server 20. The CPU 31 stores the generated data in the RAM 32 (step S203).

The CPU 41 in the client terminal 40 transmits the data request for updating the transaction screen 60 to the FX server 30 (step S204). The CPU 31 in the FX server 30 receives a data request from the client terminal 41 (step S205). The CPU 31 reads out the generated data from the RAM 32 and transmits the data that has been read out to the client terminal 40 (step S206). The client terminal 40 receives the data from the FX server 30 (step S207). The CPU 41 in the client terminal 40 uses the received data so as to display the updated transaction screen 60 on the display unit 47 (step S208).

In the step S208, the CPU 41 places the data that has been received from the FX server 30 in a determined location on the transaction screen 60 on the basis of the tag in the HTML file. In addition, the CPU 41 places in the FX information area 69 the image for the FX trade generated on the basis of the data that has been received from the FX server 30 so that the transaction screen 60 is completed. The CPU 41 displays the completed transaction screen 60 on the display unit 47.

The CPU 31 in the FX server 20 carries out the data generation in the step S202 repetitively at intervals of a specific amount of time and also carries out the storage process in the step S203 repetitively at intervals of a specific amount of time. Meanwhile, the CPU 41 in the client terminal 40 repeats the transmission of a data request in the step 204 at intervals of a specific amount of time. The CPU 41 repeats the process for updating the transaction screen 60 in the step 208 in the case where data for updating the transaction screen 60 is received from the FX server 30.

In the above, the CPU 31 in the FX server 30 transmits the data that has been read out from the RAM 32 to the client terminal in the case where a data transmission request is received from the client terminal 40. However, the CPU 31 may start generating data in response to the received data transmission request and transmit the generated data to the client terminal 40 without using the RAM 32 in the case where the data transmission request has been received from the client terminal 40.

In the case where the client presses the selected currency base button 6914 on the transaction screen 60, for example, the CPU 41 transmits a data request required for generating the chart 6911 that shows the fluctuation in the indices of the other currencies relative to the selected currency to the FX server 30 via the communication unit 45. In addition, in the case where the client has pressed the chart 2 button 692 on the transaction screen 60, the CPU 41 transmits a data request required for generating the chart 6921 to the FX server 30 via the communication unit 45. In the case where a data request has been received from the client terminal 40, the FX server 30 generates the corresponding data and transmits the generated data to the client terminal 40.

In the following, it is assumed that the client has selected the currency select button 62 for JPY, inputted a currency amount in the currency amount text box 63, and pressed the sell button 65.

The CPU 41 in the client terminal 40 receives a bundled order for the selling of JPY in the current amount that has been inputted from the operation unit 48 (step S209). The CPU 41 transmits the received bundled order to the FX server 30 via the communication unit 45 (step S210). The FX server 30 receives a bundled order of selling JPY from the client terminal 40 (step S211).

The FX server 30 transmits a foreign exchange transaction order relating to the six types of currency pairs, where JPY is to be sold and AUD, CAD, EUR, GBP, CHF, and USD are to be bought to an LP server 10 via the BO server 20 (step S212). The LP server 10 receives the foreign exchange transaction order from the FX server 30 via the BO server 20 (step S213).

A process for transmitting and receiving a foreign exchange transaction order in the step S212 and the step S213 is carried out independently for each currency pair. Therefore, in the case where a foreign exchange transaction order relates to the above described six types of currency pairs, the transmission/reception between the FX server 30 and the LP server 10 via the BO server 20 is repeated six times.

The LP server 10 carries out a process for the received foreign exchange transaction order and transmits the execution information to the FX server 30 via the BO server 20 (step S214). The FX server 30 receives the execution information from the LP server 10 via the BO server 20 (step S215).

The CPU 31 in the FX server 30 carries out a process for calculating the profit/loss in each currency pair of the six types of currency pairs included in the basket transaction (step S216). The CPU 31 generates data during the transaction, where the execution, the position status, the account status, and the profit/loss are reflected (step S217). The CPU 31 stores the generated data in the RAM 32 (step S218).

The CPU 41 in the client terminal 40 transmits a data request for updating the transaction screen 60 to the FX server 30 (step S219). The CPU 31 in the FX server 30 receives a data request from the client terminal 40 (step S220). The CPU 31 reads out the generated data from the RAM 32 and transmits the data that has been read out to the client terminal 40 (step S221).

The client terminal 40 receives data from the FX server 30 (step S222). The CPU 41 in the client terminal 40 uses the received data so as to display the updated transaction screen 60 on the display unit 47 (step S223) and completes the process.

Here, after the step S223, the CPU 31 in the FX server 30 carries out the index calculation process in the step S201 and the profit/loss calculation process in the step S216 at an interval of a specific amount of time so as to generate data for updating the transaction screen 60. The CPU 31 stores the generated data in the RAM 32. The CPU 31 reads out the generated data from the RAM 32 and transmits the data that has been read out to the client terminal 40 in response to the data request from the client terminal 40.

In the case where the client presses the profit/loss button 693 or the live report button 695 on the transaction screen 60, the CPU 41 transmits a data transmission request required for generating the bar graphs 6931 or the animated screen 6951 to the FX server 30. The FX server 30 generates data corresponding to the data request in advance and stores the generated data in the RAM 32 in order to respond to the data request from the client terminal 40. The FX server 30 transmits the data that has been stored in the RAM 32 to the client terminal 40 in response to the data request from the client terminal 40. The CPU 41 in the client terminal 40 uses the data that has been received via the communication unit 45 so as to generate the bar graphs 6931 or the animated screen 6951. The CPU 41 displays on the display unit 47 the transaction screen 60 on which the bar graphs 6931 or the animated screen 6951 are incorporated.

In the above, the FX server 30 generates data in advance and stores the generated data in the RAM 32 before the data request is received from the client terminal 40. However, the FX server 30 may generate data that corresponds to the received data request after the data request has been received from the client terminal 40.

In the case where the client having each position of a basket transaction presses the total account settlement button 66 or an individual account settlement button 6932 or 6942 on the transaction screen 60, orders of a new transaction and a transaction of closed trade are transmitted to an LP server 10 via the FX server 30 and the BO server 20. In addition, the execution information and the account settlement information are transmitted from the LP server 10 to the client terminal 40 via the FX server 30 and the BO server 20. These processes are the same as in the case of a new transaction, and therefore are not described using a flow chart.

In the above, a case where the client holds each position of only one basket transaction is described. In the FX system 1, however, the client may place orders of a plurality of basket transactions. For example, the client selects JPY so as to press the sell button 64, and in addition selects USD so as to press the buy button 64 on the transaction screen 60.

In this case, the FX server 30 manages the profit/loss for each basket transaction of the client. For example, buttons for switching the displayed profit/loss in each basket transaction are provided in the FX information area 69 on the transaction screen 60 that is displayed in the case where the profit/loss button 693, the position button 694, or the live report button 695 is pressed. In the case where such a button is pressed, the client terminal 40 transmits to the FX server 30 a data request for displaying the profit/loss of a basket transaction that is different from the basket transaction currently displayed from among the plurality of basket transactions. The FX server 30 generates data for displaying the profit/loss of the other basket transactions in advance and stores the data in the RAM 32. The FX server 30 transmits to the client terminal 40 data for displaying the profit/loss of another basket transaction in response to the data request from the client terminal 40.

In the FX system 1, the amount of the transaction unit for each currency pair is the same in the FX's of the six types of currency pairs. However, the FX system 1 may allow the client to be able to designate the amount of the transaction unit for each currency pair. In order to do so, the same number of controls as that of the types of currencies that will be exchanged may be provided so as to correspond to the currency amount text box 63.

The size of the change in the value per time unit (fluctuation in the exchange rate) is different for each currency pair. Therefore, the client can reduce the amount of the transaction unit for currency pairs having a large change in the value and can increase the amount of the transaction unit for currency pairs having a small change so that the inconsistency in the displayed risks of the currency pairs that will be handled can be reduced.

In the FX server 1, the number of the types of currencies used in the FX's is seven. In this case, the number of currencies that will be exchanged with the selected currency is six, and thus, FX trades are carried out for the six types of currency pairs. However, the FX system 1 may allow the number of types of currencies used in FX trades to be changed.

In order to do so, the functions of adding and deleting a currency pair to be handled may be added to the FX server 30. For example, currency selection buttons 62, image files and the like for the currencies that would be added are stored in advance in the hard disk 33 as components that form the transaction screen 60. In addition, a master table with which the currency pairs to be handled are registered is stored in the hard disk 33. Thus, the editing function for the master table is added to the program 3P. The CPU 31 in the FX server 30 generates an HTML file for the transaction screen 60 in reference to the master table of the currency pairs. The HTML file is downloaded in the client terminal 40 immediately after the client has logged onto the FX server 30. As a result, the currency selection button 62 for Canadian dollars, for example, can be deleted from among the currency selection buttons 62 for Japanese yen, U.S. dollars, Euros, British pounds, Swiss francs, Australian dollars, and Canadian dollars that are displayed on the transaction screen 60. In addition, a currency selection button 62 for New Zealand dollars, for example, can be added to the currency selection buttons 62 for Japanese yen, U.S. dollars, Euros, British pounds, Swiss francs, Australian dollars, and Canadian dollars that are displayed on the transaction screen 60.

The FX system 1 may include services for selling and buying stocks, gold and the like in addition to the FX trades.

The fluctuation in the foreign exchange rates is known to mutually relate to the fluctuation in the stock prices, for example. In the case where the Japanese yen changes so as to be weak relative to the other currencies, Japanese stock prices tend to increase. Therefore, a screen for displaying a stock price chart or stock prices and a screen for selling and buying stocks are added to the transaction screen 60. As a result, the client can trace the fluctuations in the foreign exchange rates for FX trades, and at the same time can carry out a financial transaction by simultaneously recognizing the fluctuations in the stock prices. Here, the stock price information and the stocks to be handled may be limited to the stocks in Japan or may include stocks in foreign countries.

In order for the FX system 1 to handle stocks, for example, the FX server 30 is connected to a server in the securities exchange market. The client terminal 40 transmits a stock order to the FX server 30, and the FX server 30 transmits the received stock order to the server in the stock exchange market. The FX server 30 receives the execution information from the server in the stock exchange market and transmits the received execution information to the client terminal 40.

In order for the FX system 1 to handle the selling and buying of gold, for example, the FX server 30 is connected to an LP server 10 of a liquidity provider who participates in the derivative market. The client terminal 40 transmits an order of selling or buying gold to the FX server 30, and the FX server 30 transmits the received order for selling or buying gold to the LP server 10. The FX server 30 receives the execution information from the LP server 10 and transmits the received execution information to the client terminal 40.

A browser that operates on the client terminal 40 in the FX system 1 may have a function for requesting an allocation of a resource with priority to the OS (operating system).

The updated transaction screen 60 displayed on the display unit 47 includes information on the FX trades, such as a chart 6911. The shorter the intervals of the amount of time at which the foreign exchange rates are updated is, the higher the precision in the information on the FX trades is. In the case where other types of software other than the browser operate on the client terminal 40, however, the load on the hardware in the client terminal 40 increases, and there is a risk of the resource being restricted concerning the rate of CPU 41 usage allocated for the browser by the OS and the capacity of the RAM 42. In such a case, it is possible for the browser not to be able to respond to the rate at which the transaction screen 60 is updated, even in the case where the transaction screen 60 updated at intervals of one to two seconds is transmitted from the FX server 30, for example. Therefore, the browser may have such a function as to request from the OS an allocation of the resource with priority over the other types of software.

Alternatively, the browser may have such a function as to restrict the other types of software that operate on the client terminal 40. For example, the browser may have such a function as to request the completion of the other types of software that have been started up, the limitation of starting up a new software and the like to the OS. In addition, the browser in the FX system 1 may have such a function as to request the limitation of starting up other browsers to the OS in the case where a plurality of browsers have been installed in the client terminal 40.

The program 4P stored in the hard disk 43 in the client terminal 40 includes a program for a browser. The browser has such a function as to request the above to the OS and may be a multipurpose browser to which a specific program that can be downloaded from the FX server 30 has been plugged in or may be a specific browser that can be downloaded from the FX server 30.

The FX system 1 makes FX trades possible with individual currency units.

Conventionally, the client designates a currency pair for FX trades. Therefore, the client traces and searches the fluctuations in the exchange rates of the currency pairs in order to determine the currency pair for the transaction. Exchange rates are ratios at which two currencies are exchanged, and therefore tend to be difficult to predict as compared to stock transactions, for example, where one stock is to be selected, and thus in some cases, it is difficult to make a profit in FX trading.

However, the FX system 1 makes FX trading possible by selecting one individual currency for a transaction instead of selecting a currency pair for transaction in the same manner as selecting a stock for investment in the stock market. In the case where a strong yen is expected in the future, for example, the Japanese yen can be bought without selecting another currency to make a pair. Likewise, in the case where a weak yen is expected in the future, the Japanese yen can be sold without selecting another currency to make a pair.

In the case where one is assumed to be a general citizen who resides in Japan, for example, the Japanese yen is central to the real feeling of the consumers along with the information seen or heard about the political and economic situations, and thus, it is easy to predict if the Japanese yen will be stronger or weaker in the future as compared to foreign currencies. In the case where a client thought that he or she should buy or sell Japanese yen, it is necessary to designate a currency pair for FX trading in conventional FX systems, and therefore, it is necessary to predict against which currencies the Japanese yen will become stronger or weaker. In the FX system 1, however, FX trading is possible on the basis of the prediction if the Japanese yen will be stronger or weaker without being aware of another currency to make a pair.

Though transactions of Japanese yen are mainly described here, currencies other than the Japanese yen can be handled in the same manner, and the FX system 1 makes FX trading possible with a foreign currency on the basis of the economic indices and the political situations in the country. In the case where the Euro is predicted to weaken further in such a situation as a "Euro crisis," for example, it is possible to execute the "selling of Euro."

The transaction screen 60 in the FX system 1 can display indices for showing the strengths of individual currencies relative to each other.

One type of currency has exchange rates of many currency pairs, and thus in some cases, it is difficult to find the trend of the exchange rates. However, the transaction screen 60 shows the indices of the individual currencies in the chart 6911 or 6921, and therefore, the client can carry out FX trading just by being aware of the individual currencies and without being aware of currency pairs. That is to say, the client can simply select a currency for FX trading on the basis of the strengths of the individual currencies in the same manner as to select a stock in a stock market.

The transaction screen 60 in the FX system 1 makes an individual account settlement for each currency pair possible and also makes a bundled account settlement for all the currency pairs possible in a basket transaction for six types of currency pairs.

The client can confirm the profit or loss in the position of a certain currency pair, for example, while checking the bar graph 6931, the position table 6941, or the animated screen 6951 that show the profit/loss, and after that can carry out a bundled account settlement for the currency pairs that have not been settled in accordance with good timing. At this time, the FX system 1 can display the total profit/loss of all of the six types of currency pairs, which includes the confirmed profit/loss, in the transaction status label 67 on the transaction screen 60 when the client confirms the profit or loss of the position of a certain currency pair.

The indices in the FX system 1 can reduce the difference in the volatility (size of the change in the value) due to the differences in the currencies.

The formula (3) expresses the change in the exchange rate as a ratio (change ratio). Therefore, the FX server 30 calculates the changes in the exchange rates having different volatilities uniformly. For example, the FX server 30 can calculate the fluctuation of the Japanese yen relative to one U.S. dollar and the fluctuation of the U.S. dollar relative to one Japanese yen uniformly.

Furthermore, the FX server 30 uses common logarithms of the ratios of the exchange rates as calculation factors of the indices. Therefore, the FX server 30 can handle the increase and decrease of an exchange rate equally with only the difference in the sign (+) or (-). Cases where the price of one U.S. dollar has risen by 20 yen from 80 yen to 100 yen and has fallen by 20 yen from 100 yen to 80 yen are assumed, for example. Though in both cases the amount of fluctuation is 20 yen, the change ratios are 20 yen/80 yen = 0.25 and 20 yen/100 yen = 0.2, respectively, which are different. In this case, however, the FX server 30 calculates as follows:

$$\log(100 \text{ yen}/80 \text{ yen}) = 0.223...$$

$$\log(80 \text{ yen}/100 \text{ yen}) = -0.223...$$

That is to say, the increase and the decrease in the exchange rate have values having the same absolute value as a calculation factor of the index in the case where the amount of the fluctuation is the same. In addition, the increase and the decrease of the exchange rate can be expressed differently by using plus and minus, and therefore, the exchange rates of a plurality of currency pairs can be handled equally and objectively in order to find an arithmetic mean of the common logarithm values. This means that the client is provided with very beneficial information to select one currency by checking the chart 6911 or 6921 on the transaction screen 60.

Embodiment 2

Embodiment 2 relates to a mode for displaying the strengths of individual currencies using the PIPs indices.

In embodiment 2, the same reference numbers are added to the same components as in embodiment 1, and the detailed descriptions thereof are not described.

The index calculation unit 303 in embodiment 2 displays the strengths of individual currencies using the PIPs indices. Therefore, the index calculation unit 303 calculates the strength of an individual currency using the following formula (4), for example.

$$\text{Index} = (\Sigma((\text{Exchange rate at most recent point in time} -$$

$$\text{Exchange rate at point in time of start of calculation}) \div \text{number of}$$

$$\text{handled currency pairs} \ldots (4)$$

$\Sigma$ in the formula (4) means the addition of the differences in the exchange rates by the number of handled currency pairs.

Concretely, the CPU 31 calculates the strengths of individual currencies using the following formulas.

$$\text{Strength of JPY} = (\text{f(USDJPY)} + \text{f(EURJPY)} + \text{f(GBPJPY)} +$$

$$\text{f(CHFJPY)} + \text{f(AUDJPY)} + \text{f(CADJPY)}) \div 6$$

$$\text{Strength of USD} = (\text{f(USDJPY)} + \text{f(EURUSD)} + \text{f(GBPUSD)}$$
$$+ \text{f(USDCHF)} + \text{f(AUDUSD)} + \text{f(USDCAD)}) \div 6$$

$$\text{Strength of GBP} = (\text{f(GBPJPY)} + \text{f(GBPUSD)} + \text{f(EURGBP)} +$$
$$\text{f(GBPCHF)} + \text{f(GBPAUD)} + \text{f(GBPCAD)}) \div 6$$

$$\text{Strength of CHF} = (\text{f(CHFJPY)} + \text{f(USDCHF)} + \text{f(EURCHF)}$$
$$+ \text{f(GBPCHF)} + \text{f(AUDCHF)} + \text{f(CADCHF)}) \div 6$$

$$\text{Strength of AUD} = (\text{f(AUDJPY)} + \text{f(AUDUSD)} + \text{f(EURAUD)}$$
$$+ \text{f(GBPAUD)} + \text{f(AUDCHF)} + \text{f(AUDCAD)}) \div 6$$

$$\text{Strength of CAD} = (\text{f(CADJPY)} + \text{f(USDCAD)} + \text{f(EURCAD)}$$
$$+ \text{f(GBPCAD)} + \text{f(CADCHF)} + \text{f(AUDCAD)}) \div 6$$

Here, f(USDJPY) denotes the following:

$$\text{f(USDJPY)} = (\text{USDJPY2} - \text{USDJPY1}) \times 100,$$

where USDJPY1 is the exchange rate at the point in time of the start of calculation of the currency pair USD and JPY, and
USDJPY2 is the exchange rate at the most recent point in time of the currency pair USD and JPY.
As described above, PIP is the minimum unit of fluctuation in the exchange rates. Here, the minimum unit indicated by PIP is different from currency pair to currency pair. In the currency pairs that include the yen, one PIP = 0.01 yen. In the currency pairs that do not include the yen, one PIP = 0.0001 U.S. dollar = 0.0001 British pound = 0.0001 Swiss franc = ...
In many cases, a currency of 10000 is used as the transaction unit for an FX trade. Therefore, in the case where the PIPs are converted to yen, the figure is multiplied by 100, while in the case where the PIPs are converted to U.S. dollars, the figure is multiplied by 10000. Accordingly, f(EURJPY) and the like are calculated as follows:

$$\text{f(EURJPY)} = (\text{EURJPY2} - \text{EURJPY1}) \times 100$$

$$\text{f(EURUSD)} = (\text{EURUSD2} - \text{EURUSD1}) \times 10000$$

The FX server 30 generates the chart 6911 or 6921 using the above described PIP index in the case of generating the transaction screen 60.
The PIP indices in the FX system 1 can provide novice FX traders with an environment where FX trades can be easily executed.

The FX rates fluctuate with PIPs as the minimum unit, and therefore, the PIP indices are easy for novice traders to understand. In addition, the fluctuations in the indices can be seen as being linked to the fluctuations in the exchange rates and fluctuations of the profits, and therefore, the FX server 30 can provide the novice FX trader with an interface that is easy to use.

Embodiment 3

Embodiment 3 relates to a mode for displaying the strengths of individual currencies using a denomination index. In the following, the en is illustrated as the denomination unit. The denomination unit, of course, is not limited to the yen and may be the U.S. dollar or the Swiss franc.
In embodiment 3, the same reference numbers are attached to the components that are the same as in embodiment 1 and embodiment 2, and the details thereof are not described.
An index calculation unit 303 in embodiment 3 displays the strengths of individual currencies using denomination indices. Therefore, the index calculation unit 303 calculates the strengths of individual currencies using the following formula (5), for example:

$$\text{Index} = (\Sigma((\text{Exchange rate at most recent point in time} -$$
$$\text{Exchange rate at point of time of start of calculation}) \times 10000 \times$$
$$\text{Exchange rate for exchanging to yen})) \div \text{number of handled}$$
$$\text{currency pairs} \dots (5)$$

$\Sigma$ in the formula (5) denotes the addition of the differences in the exchange rate by the number of the handled currency pairs. $\times$ 10000 in the formula (5) denotes that a case where the transaction unit is a currency of 10000 is assumed.
Concretely, the CPU 31 calculates the strengths of individual currencies using the following formulas.

$$\text{Strength of JPY} = (h(USDJPY) + h(EURJPY) + h(GBPJPY)$$
$$+ h(CHFJPY) + h(AUDJPY) + h(CADJPY)) \div 6$$

$$\text{Strength of USD} = (h(USDJPY) + h(EURUSD) +$$
$$h(GBPUSD) + h(USDCHF) + h(AUDUSD) + h(USDCAD)) \div 6$$

$$\text{Strength of GBP} = (h(GBPJPY) + h(GBPUSD) + h(EURGBP)$$
$$+ h(GBPCHF) + h(GBPAUD) + h(GBPCAD)) \div 6$$

$$\text{Strength of CHF} = (h(CHFJPY) + h(USDCHF) +$$
$$h(EURCHF) + h(GBPCHF) + h(AUDCHF) + h(CADCHF)) \div 6$$

$$\text{Strength of AUD} = (h(AUDJPY) + h(AUDUSD) +$$

$$h(EURAUD) + h(GBPAUD) + h(AUDCHF) + h(AUDCAD)) \div 6$$

$$\text{Strength of CAD} = (h(CADJPY) + h(USDCAD) +$$

$$h(EURCAD) + h(GBPCAD) + h(CADCHF) + h(AUDCAD)) \div 6$$

Here, h(USDJPY) denotes the following:

$$h(USDJPY) = (USDJPY2 - USDJPY1) \times 10000,$$

where USDJPY1 is the exchange rate at the point in time of the start of calculation of the currency pair USD and JPY, and USDJPY2 is the exchange rate at the most recent point in time of the currency pair USD and JPY.
In the following, the functions h for currency pairs other than h(USDJPY) are illustrated.

$$h(EURJPY) = (EURJPY2 - EURJPY1) \times 10000$$

$$h(EURUSD) \text{ is the exchange rate for } (EURUSD2 -$$

$$EURUSD1) \times 10000 \times USDJPY$$

$$h(GBPCHF) \text{ is the exchange rate for } (GBPCHF2 -$$

$$GBPCHF1) \times 10000 \times CHFJPY$$

The FX server 30 generates the chart 6911 or 6921 using the above described denomination index in the case of generating a transaction screen 60.
An FX trade environment that is easy for the client to understand can be provided using the denomination indices in the FX system 1.
The indices for the strengths of individual currencies are displayed on the transaction screen 60 on the basis of amount of money of the profit/loss, and therefore, the client can see the indices in a realistic sense. The client can easily calculate the profit/loss from the fluctuations in the indices displayed as a denomination.

Embodiment 4

Embodiment 4 relates to a mode for carrying out an order process for the FX trade at the date and time designated by the client in advance.
In embodiment 4, the same reference numbers are attached to the components that are the same in embodiment 1 to embodiment 3, and the details thereof are not described.

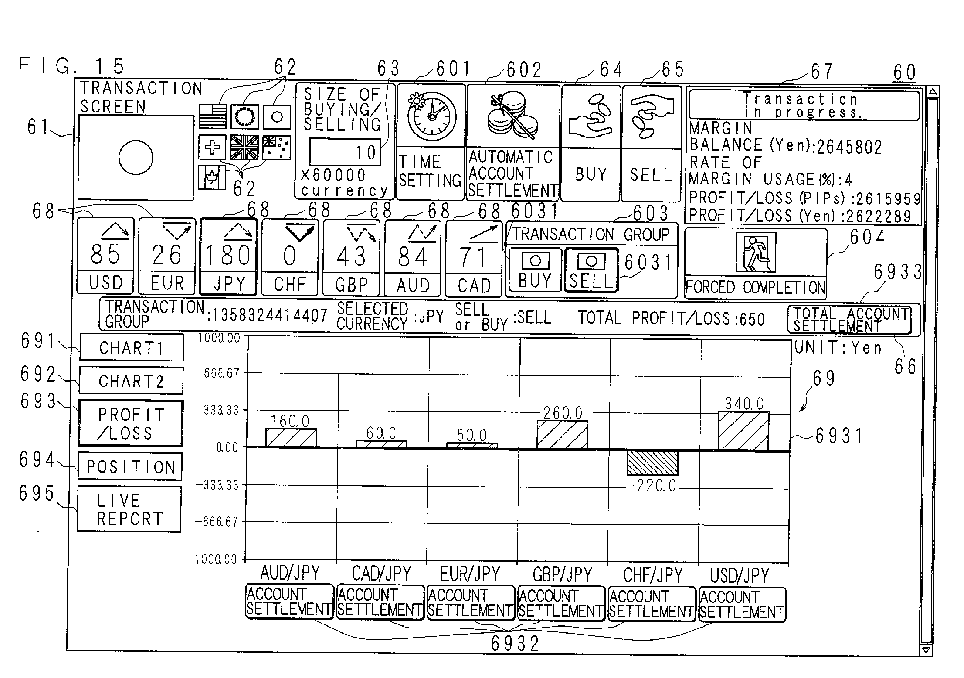

Fig 15 is a diagram for illustrating another example of the screen layout on a transaction screen 60 in such a state that the profit/loss button 693 has been pressed. The transaction screen 60 includes a time setting button 601, an automatic account settlement button 602, a transaction group label 603, a forced completion button 604, and an FX information area 69.
Here, the automatic account settlement button 602 is described in embodiment 5.
The time setting button 601 is a control for setting the date and time in advance when an order for an FX trade is placed. The date and time that can be set is the date and time when a transaction order of selling or buying the selected currency is to be placed and the date and time when an account settlement for the basket transaction that has started and is in progress is to be carried out. In other words, the date and time that can be set is the date and time when the FX trade for a basket transaction is started and the date and time when it is completed. The client can designate in advance the date and time when the FX trade for a basket transaction is started or completed, or the date and time when the FX trade is started and completed by pressing the time setting button 601. The client can naturally do without designating such a date and time in advance. That is to say, the time setting button 601 is a control for implementing an optional function in the FX system 1.

The transaction group label 603 is a label that assumes a container for containing a basket icon 6031 corresponding to a buying or selling basket transaction in the case where the client carries out an FX trade for such a basket transaction by selecting one currency. The basket icon 6031 corresponds to a basket transaction and relates to six positions for six types of currency pairs included in the basket transaction. These six positions are assumed to consist of the contents of one virtual basket and are displayed as one basket icon 6031 on the transaction screen 60. In the case where the FX trade for one basket transaction is completed, the CPU 41 in the client terminal 40 generates a transaction screen 60 in such a state that the basket icon 6031 corresponding to this basket transaction has been deleted from the transaction group label 603. Therefore, the CPU 31 in the FX server 30 transmits to the client terminal 40 data for generating a transaction screen 60 in such a state that the basket icon 6031 corresponding to this basket transaction has been deleted from the transaction group label 603 in the case where a data request has been received from the client terminal 40.

In the case where the FX system 1 includes the services of selling and buying stocks, gold and the like, an icon corresponding to such a financial product is displayed within the transaction group label 603 when a transaction for this financial product is carried out. In order to do so, the hard disk 33 in the FX server 30 stores components, such as image files of icons, that correspond to the financial products other than the FX trades. These components are downloaded to the client terminal 40 from the FX server 30 immediately after the client has logged onto the FX server 30.

Fig 15 illustrates a basket icon 6031 for a buying order when the Japanese yen has been selected and a basket icon 6031 for a selling order when the Japanese yen has been selected in the transaction group label 603. In the case where one basket icon 6031 has been pressed, the CPU 41 displays the highlighted portion around the basket icon 6031 that has been pressed. Fig 15 illustrates a case where the basket icon 6031 has been selected for a selling order when the Japanese yen has been selected.

The forced completion button 604 is a control for a bundled implementation in real time of closed trade for the positions of all the basket transactions. In the case where the forced completion button 604 is pressed in Fig 15, for example, an account settlement process is carried out on all the positions corresponding to the two basket icons 6031 displayed in the transaction group label 603 in real time by means of the CPU 31 in the FX server 30.

The FX information area 69 is a screen region that includes a child screen for displaying the transaction information on the FX trades. The transaction information in Fig 15 is shown by the bar graph 6931 as the profit/loss of each position in the basket transaction corresponding to the selected basket icon 6031 from among the basket icons 6031 displayed in the transaction group label 603. That is to say, the FX information area 69 displays the bar graph 6931 for the profit/loss of each position of the basket transaction corresponding to the selected basket icon 6031. In Fig 15, the basket icon 6031 has been selected for a selling order when the Japanese yen has been selected, and therefore, the profit/loss of each of the six currencies relative to the Japanese yen is displayed as the bar graph 6931 in the FX information area 69.

The FX information area 69 includes a basket bar label 6933. The basket bar label 6933 displays information attributed to the basket transaction corresponding to the selected basket icon 6031. The basket bar label 6933 is located in the upper portion of the FX information area 69 and is a rectangular form that is long laterally. The basket bar label 6933 displays from left to right the identification code of the basket transaction, the selected currency, the selling or buying, and the total monetary amount of profit/loss, respectively, in one row.

A total account settlement button 66 is displayed in the far right portion in the basket bar label 6933. The total account settlement button 66 is a control for the bundled implementation in real time of closed trade for each position of the basket transaction corresponding to the selected basket icon 6031. The bundled account settlement button 66 has the same function as the total account settlement button 66 in Fig 6.

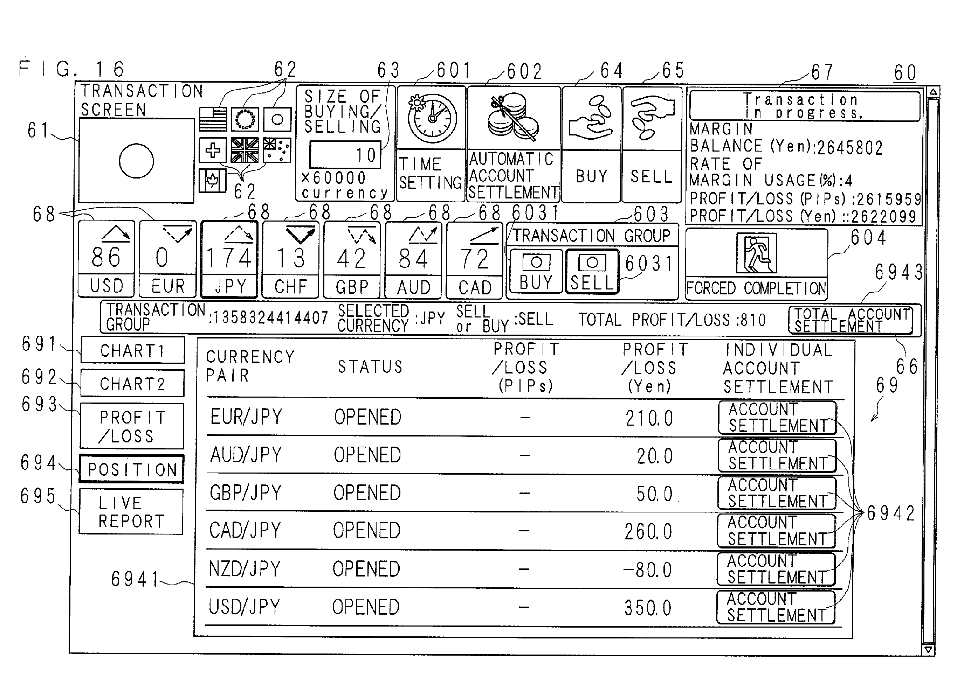

Fig 16 is a diagram for illustrating another example of the screen layout of a transaction screen 60 in such a state that the position button 694 has been pressed. In Fig 16, a basket icon 6031 corresponding to the selling order of the Japanese yen has been selected. In addition, the position table 6941 displays the position information for each of the six types of currency pairs corresponding to the selected basket icon 6031. That is to say, the FX information area 69 displays a position table 6941 that shows the information on each position corresponding to the selected basket icon 6031. Here, in the position table 6941 in Fig 16, the BID and ASK columns included in the position table 6941 in Fig 10 have been deleted.

The basket bar label 6943 included in the FX information area 69 in Fig 16 has the same functions as the basket bar label 6933 included in the FX information area 69 in Fig 15. In addition, the total account settlement button 66 displayed in the far right portion of the basket bar label 6943 also has the same functions as the total account settlement button 66 displayed in the far right portion of the basket bar label 6933.

Next, the operation of the FX system 1 in the case where the time setting button 601 has been pressed is described.

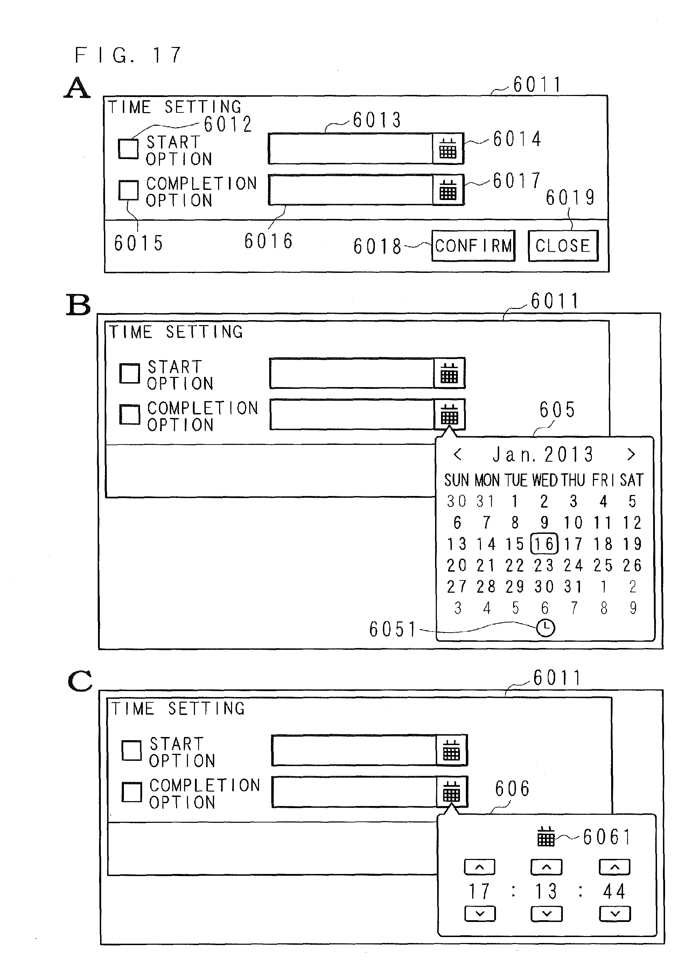

Figs 17A to 17C are diagrams for illustrating an example of the screen layouts of a time setting screen 6011. Fig 17A shows the initial state of the time setting screen 6011 that is displayed in the case where the time setting button 601 has been pressed. Fig 17B shows the time setting screen 6011 in such a state that a calendar control 605 has been displayed. Fig 17C shows the time setting screen 6011 in such a state that a time setting control 606 has been displayed.

In the case where the time setting button 601 has been pressed, the CPU 41 displays a time setting screen 6011 at approximately the center of the transaction screen 60 in the front as a pop up screen (Fig 17A). At this time, the CPU 41 displays the transaction screen 60 in black (not shown in Fig 17A) so that it is set to be inaccessible. The time setting screen 6011 is an input screen for the client to set in advance the date and time when an order of an FX trade is to be carried out.

The time setting screen 6011 includes a start check box 6012, a start text box 6013, and a start setting auxiliary button 6014. The start check box 6012 is a control that is checked in the case of setting the date and time when the transaction for an FX trade is started. A letter string saying, "Start option," is displayed to the right of the start check box 6012. The start text box 6013 is a control for inputting the date and time when the transaction for an FX trade is to be started. The input format for the start text box 6013 is yyyy/mm/dd hh:mm:ss, for example. The client can input the date and time manually into the start text box 6013 using a keyboard, for example. At this time, the CPU 41 displays the date and time that has been inputted by the client in the start text box 6013 on the basis of the operation signal that has been received from the operation unit 48.

The start setting auxiliary button 6014 is a button for displaying a control for selecting the date and time and inputting the date and time into the start text box 6013. A figure imitating a calendar is displayed on the start setting auxiliary button 6014. In the case where the start setting auxiliary button 6014 has been pressed, the CPU 41 displays a calendar control 605 in the lower right portion of the time setting screen 6011 in the front (Fig 17B). In the case where a date and time is selected and pressed using the calendar control 605, the CPU 41 displays the selected and pressed date and time in the start text box 6013. In the case where the start setting auxiliary button 6014 is again pressed in such a state that the calendar control 605 has been displayed, the CPU 41 hides the calendar control 605 on the screen of the display unit 47.

At the center in the lower portion of the calendar control 605, a time icon 6051 is displayed (Fig 17B). The time icon 6051 has a figure mimicking a clock with hands. In the case where the time icon 6051 is pressed, the CPU 41 erases the calendar 605 and displays the time setting control 606 in the lower right portion of the time setting screen 6011 (Fig 17C). The time setting control 606 includes a display region for displaying hours, minutes, and seconds, and six buttons for increasing or decreasing the hours, minutes and seconds, respectively. These six buttons are shown with figures in V shape or reverse V shape that indicate the increase or decrease of the time, respectively. The client can change the hours, minutes and seconds displayed in the display region by pressing these six buttons.

At the center in the upper portion of the time setting control 606, a calendar icon 6061 is displayed (Fig 17C). The calendar icon 6061 has a figure mimicking a calendar. In the case where the calendar icon 6061 is pressed, the CPU 41 additionally displays the hours, minutes and seconds displayed in the display region of the time setting control 606 to the right of the date that has been inputted into the start text box 6013. In the case where the calendar icon 6061 is pressed, the CPU 41 erases the time setting control 606 and again displays the calendar control 605 in the lower right portion of the time setting screen 6011 (Fig 17B). The client again operates the calendar control 605 so as to update the date that has been entered into the start text box 6013. In the case where the start setting auxiliary button 6014 is again pressed in the state where the calendar control 605 is displayed, the CPU 41 erases the calendar control 605 from the screen in the display unit 47.

There is another method for inputting the hours, minutes and seconds that have been set in the start text box 6013 by means of the time setting control 606. In the case where a white margin portion in the time setting control 606 is pressed in the state where the time setting control 606 is displayed with the hours, minutes and seconds in the display region, the CPU 41 additionally displays the hours, minutes and seconds displayed in the display region to the right of the date that has been inputted into the start text box 6013. In this case, the CPU 41 erases the time setting control 606 from the screen in the display unit 47.

The time setting screen 6011 includes a completion check box, a completion text box 6016 and a completion setting auxiliary button 6017. The completion check box 6015 is a control for checking in the case where the date and time when the transactions for FX trades are to be completed, that is to say, the date and time for account settlement are set. A letter string saying, "Completion option," is displayed to the right of the completion check box 6015. The completion text box 6016 is a control for inputting the date and time for completing the transactions for FX trades. The completion setting auxiliary button 6017 is button to display the control for selecting the time and date and inputting the selected time and date into the completion text box 6016.

The functions and the operations of the completion check box 6015, the completion text box 6016 and the completion setting auxiliary button 6017 are the same as the functions and operations of the start check box 6012, the start text box 6013 and the start setting auxiliary button 6014, respectively. Therefore, the details of the completion check box 6015, the completion text box 6016 and the completion setting auxiliary button 6017 are not described.

The time setting screen 6011 includes a confirmation button 6018 and a closing button 6019 (Fig 17A). The confirmation button 6018 is a control to store the start or completion that has been set on the time setting screen 6011 and the date and time for the start or completion in the RAM 42 or in the hard disk 43. The closing button 6019 is a control to erase the time setting screen 6011 from the screen in the display unit 47. In the case where the closing button 6019 is pressed, the CPU 41 erases the time setting screen 6011 from the screen in the display unit 47, and at the same time returns the color on the transaction screen 60 from black to a normal color and sets the transaction screen 60 to an accessible state.

The client sets the date and time for placing an order for an FX trade on the time setting screen 6011, and after that continuously carries out an operation of placing an order for an FX trade on the transaction screen 60. That is to say, the client sets the time and date when an FX order is to be placed, and after that continuously selects one currency by using a currency select button 62 and presses a buy button 64 or a sell button 65. At this time, the CPU 41 in the client terminal 40 corresponds the order information to the date and time stored in the RAM 42 or in the hard disk 43 and transmits the order information to the FX server 30.

The CPU 31 in the FX server 30 categorizes the received order information into cases where only the start date and time are set, where only the completion date and time are set, and where the start and completion date and time are set, and carries out a process for an FX trade.

In the case where only the start date and time are set, the CPU 31 carries out a process for starting an FX trade at the start date and time on the basis of the timekeeping by the timer 36. In the case where only the completion date and time are set, the CPU 31 carries out a process for starting an FX trade in real time on the basis of the timekeeping by the timer 36 and carries out a process for account settlement of the FX trade at the completion time and date. In the case where the start and completion date and time are set, the CPU 31 carries out a process for starting an FX trade at the start date and time on the basis of the timekeeping by the time 36 and carries out a process for account settlement of the FX trade at the completion date and time.

In the case where a process for account settlement of a basket transaction that has already been ordered is desired to be carried out on the date and time that have been designated in advance, the client carries out the following operation on the transaction screen 60. The client sets the basket icon 6031 that corresponds to the basket transaction of which the account settlement is desired to be carried out to a selected state. The client presses the time setting button 601 in such a state that the basket icon 6031 has been selected. The client sets the completion date and time on the time setting screen 6011 and presses the confirmation button 6018. At this time, the CPU 41 in the client terminal 40 corresponds the identification information on the basket transaction corresponding to the selected basket icon 6031 to the completion date and time that have been set and transmit the identification information to the FX server 30.

The FX server 30 receives identification information on the basket transaction and the completion date and time that have been set from the client terminal 40. On the basis of the timekeeping by the timer 36, the CPU 31 in the FX server 30 carries out a process for account settlement of the basket transaction that corresponds to the identification information on the completion date and time that have been set.

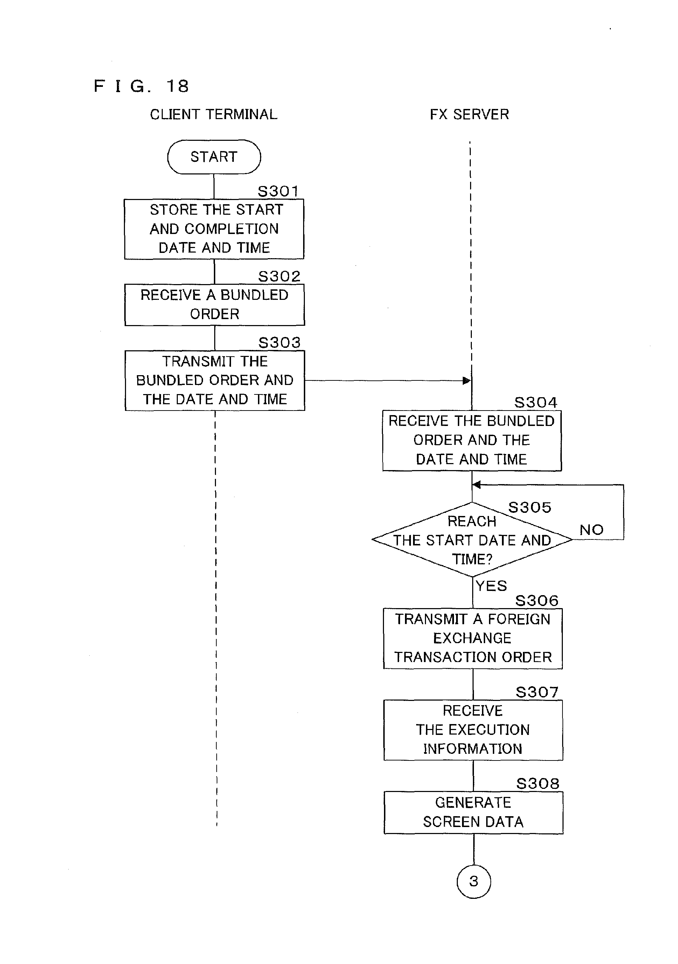

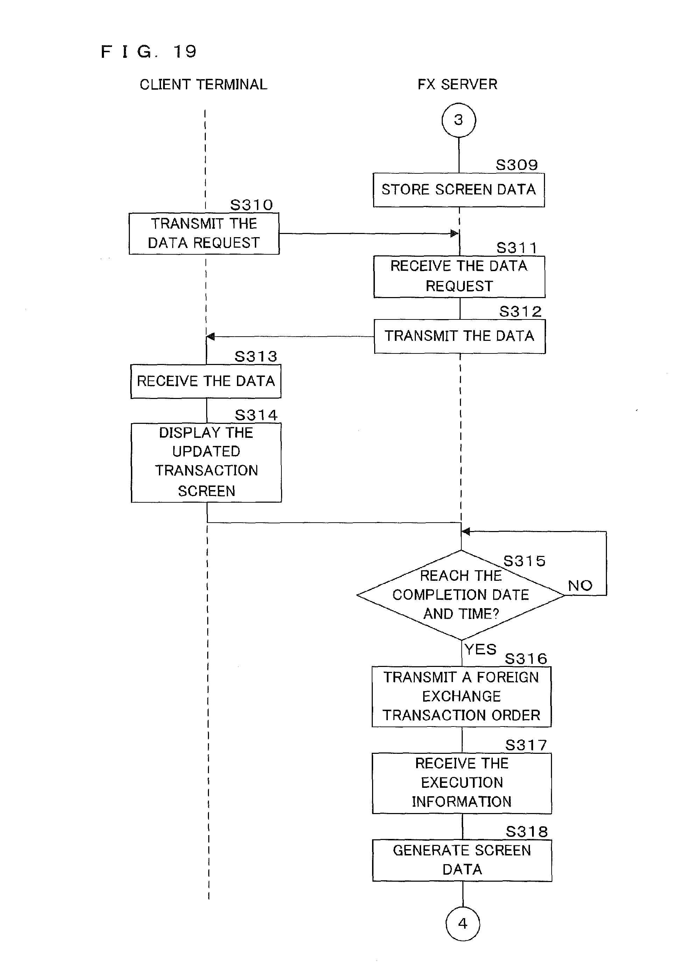

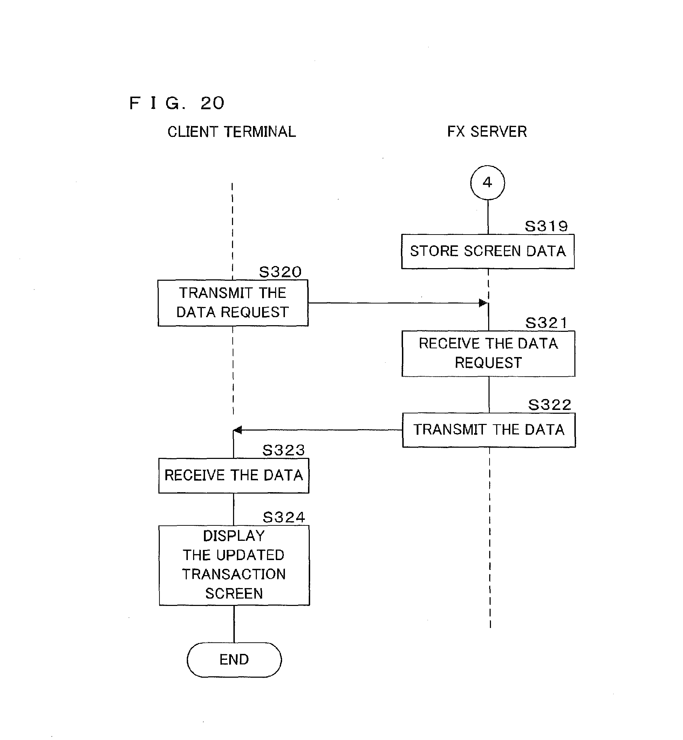

Figs 18, 19 and 20 are flow charts showing an example of the procedure for a transaction process for an FX trade accompanying the setting of the date and time. Figs 18, 19 and 20 do not show the procedures for the processes carried out by the LP servers 10 and the BO server 20. In the following, a case where the client sets both the start and completion date and time for an FX trade and places an order for the FX trade is described.

The CPU 41 in the client terminal 40 stores the start and completion date and time that have been set on the time setting screen 6011 in the RAM 42 (step S301). The CPU 41 receives a bundled order for the selected currency (step S302). The CPU 41 corresponds the received bundled order to the start and completion date and time stored in the RAM 42 and transmits the bundled order and the date and time to the FX server 30 (step S303).

The CPU 31 in the FX server 30 receives the bundled order and the start and completion date and time (step S304). The CPU 31 determines whether or not the received start date and time have been reached on the basis of the timekeeping by the timer 36 (step S305). In the case where it is determined that the received start date and time have not been reached on the basis of the timekeeping by the timer 36 (NO in step S305), the CPU 31 returns the process to step S305.

In the case where it is determined that the received start date and time have been reached on the basis of the timekeeping by the timer 36 (YES in step S305), the CPU 31 transmits the foreign exchange transaction order for the received bundled order to an LP server 10 via the BO server 20 (step S306). The FX server 30 receives the execution information from the LP server 10 via the BO server 20 (step S307).

The CPU 31 in the FX server 30 generates data for a transaction screen 60 that includes the received execution information (step S308). The CPU 31 stores the generated data in the RAM 32 (step S309). The CPU 41 in the client terminal 40 transmits a data request to the FX server 30 (step S310). The CPU 31 in the FX server 30 receives a data request from the client terminal 40 (step S311).

The CPU 31 reads out the data that corresponds to the received data request from the RAM 32 and transmits the data that has been read out to the client terminal 40 (step S312). The client terminal 40 receives the data from the FX server 30 (step S313). The CPU 41 in the client terminal 40 uses the received data and updates the transaction screen 60 in the display unit 47 (step S314).

The CPU 31 determines whether or not the received completion date and time have been reached on the basis of the timekeeping by the timer 36 (step S315). In the case where it is determined that the received completion date and time have not yet been reached on the basis of the timekeeping by the timer 36 (NO in step S315), the CPU 31 returns the process to step S315.

In the case where it is determined that the received start date and time have been reached on the basis of the timekeeping by the timer 36 (YES in step S315), the CPU 31 transmits the foreign exchange transaction order for a bundled account settlement order of a basket transaction to an LP server 10 via the BO server 20 (step S316). The FX server 30 receives the execution information on the bundled account settlement order of the basket transaction from the LP server 10 (step S317).

The CPU 31 in the FX server 30 generates the data for the transaction screen 60 that includes the execution information on the bundled account settlement order of the received basket transaction (step S318). The CPU 31 stores the generated data in the RAM 32 (step S319). The CPU 41 in the client terminal 40 transmits a data request for updating the transaction screen 60 to the FX server 30 (step S320).

The FX server 30 receives a data request from the client terminal 40 (step S321). The CPU 31 reads out the data that corresponds to the received data request from the RAM 32 and transmits the data that has been read out to the client terminal 40 (step S322). The client terminal 40 receives the data from the FX server 30 (step S323). The CPU 41 in the client terminal 40 uses the received data so as to update the transaction screen 60 in the display unit 47 (step S324) and completes the process.

Here, in the above described option transaction at the designated date and time, the client may make a payment to an FX dealer. In the case where there is a profit from the option transaction, the client receives an amount of money that is gained by multiplying a certain ratio and the payment, while in the case where there is a loss, the client may lose the paid money. In order to do so, the transaction screen 60 is provided with a control for inputting an amount of money to be paid. The amount of money to be paid is transmitted to the FX server 30 from the client terminal 40. The CPU 31 in the FX server 30 carries out a process for balancing the paid money on the designated date and time for account settlement.

The FX system 1 can carry out a process for starting or completing (account settling) the FX trade at the designated date and time.

In the foreign exchange markets, a great fluctuation in the exchange rate may occur due to the effects of fundamentals, including the announcements of the economic indices in each country (interest rate determined by a policy, GDP, employment statistics and the like). In some cases, clients may wish to start an FX trade positively by predicting the fluctuation in the exchange rate due to the announcement of an economic index, for example. In other cases, clients may wish to complete the position during the transactions (account settlement) before the announcement of an economic index when it is determined that the fluctuation in the exchange rate due to the announcement of the economic index is risky. The date and time when the economic indices of each country are to be announced are known in advance. Therefore, the clients can plan to increase the opportunities for a profit and reduce the possibilities of a loss when the FX system 1 has the functions of starting or completing (account settling) an FX trade at the designated date and time.

Embodiment 5

Embodiment 5 relates to a mode where an account settlement process for all the positions of a basket transaction is carried out in the case where the total amount of money of the profit and loss for each position in the basket transaction has reached the amount of money designated by the client.

Figs 15 and 16 show the transaction screen 60 in embodiment 5. In embodiment 5, the same reference numbers are attached to the same components as in embodiment 1 to embodiment 4, and the details thereof are not described.

The transaction screen 60 includes an automatic account settlement button 602 (see Figs 15 and 16).

The automatic account settlement button 602 is a control for setting the amount of money that is designated as a condition for automatically carrying out an account settlement for the FX trade. The amount of money that can be designated is either an amount of money for confirming a profit or an amount of money for confirming a loss. Here, the profit or loss is a total amount of money of the profits and losses for the six positions in the basket transaction. In the case where the client has two basket transactions concerning a sell order designating Japanese yen and a buy order designating Japanese yen, for example, the client can set an amount of money to be designated for each of the two basket transactions on the transaction screen 60. In the case where the total amount of money of the profits and losses for the six positions in the basket transaction has reached the amount of money that has been designated, the FX system 1 can carry out an account settlement for the basket transaction. The client can either designate an automatic account settlement by pressing the automatic account settlement button 602 or do without designating.

Next, the operation of the FX system 1 in the case where the automatic account settlement button 602 has been pressed on the transaction screen 60 is described.

The total account settlement button 66 within the basket bar label 6933 or 6943 in embodiment 5 is used when an order of an automatic account settlement is transmitted to the FX server 30 from the client terminal 40 working together with the function of the automatic account settlement button 602.

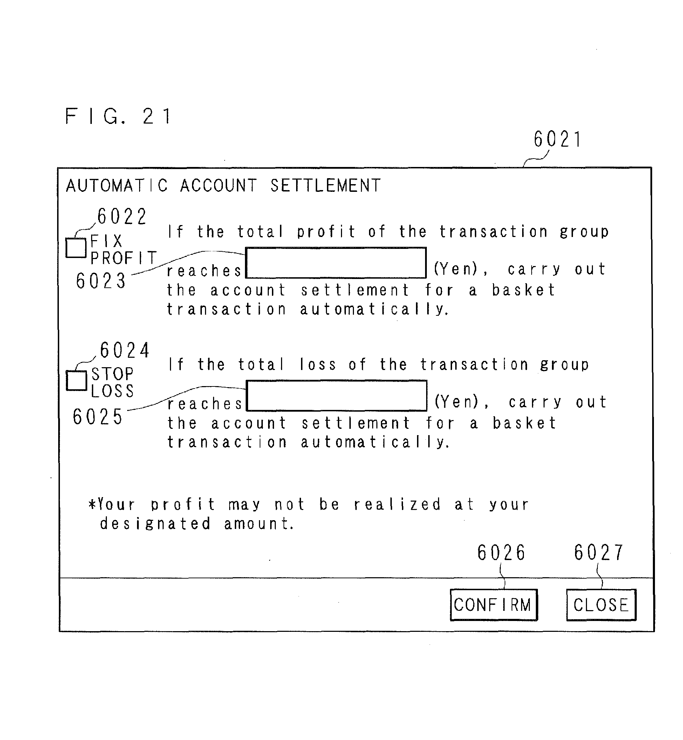

Fig 21 is a diagram for illustrating an example of the screen layout of the automatic account settlement screen 6021. In the case where the automatic account settlement button 602 is pressed in such a state where the basket icon 6031 has been selected, the CPU 41 displays an automatic account settlement screen 6021 at approximately the center of the transaction screen 60 as a pop up screen (Fig 21). At this time, the CPU 41 displays the transaction screen 60 in black for the setting of being inaccessible. The automatic account settlement screen 6021 is an input screen for setting the amount of money to be designated for an account settlement process that is carried out on the basket transaction corresponding to the selected basket icon 6031.

The automatic account settlement screen 6021 includes a profit confirmation check box 6022, an amount of money as the profit text box 6023, a loss confirmation check box 6024, and an amount of money as the loss text box 6025. The profit confirmation check box 6022 is a control to be checked when an account settlement for a basket transaction is automatically carried out in the case where the profit for the basket transaction has reached a certain critical amount of money. A letter string saying, "FIX PROFIT", is displayed to the right of the profit confirmation check box 6022. The amount of money as the profit text box 6023 is a control for designating and inputting a certain critical amount of money in order for an automatic settlement to be carried out in the case where the profit for the basket transaction has reached the critical amount of money.

Here, the critical amount of money is designated by the client, and thus is also referred to as the designated amount of money.

The loss confirmation check box 6024 is a control to be checked when an account settlement for a basket transaction is automatically carried out in the case where the loss for the basket transaction has reached a certain critical amount of money. A letter string saying, "STOP LOSS", is displayed to the right of the loss confirmation check box 6024. The amount of money as the loss text box 6025 is a control for designating and inputting a certain critical amount of money in order for an automatic settlement to be carried out in the case where the loss for the basket transaction has reached the critical amount of money.

The automatic account settlement screen 6021 includes a confirmation button 6026 and a close button 6027. The confirmation button 6026 is a control for storing the profit or the loss that has been set on the automatic account settlement screen 6021 or the critical amounts of money for the profit and the loss in the RAM 42 or on the hard disk 43. The close button 6027 is a control for erasing the automatic account settlement screen 6021 from the screen in the display unit 47. In the case where the close button 6027 is pressed, the CPU 41 erases the automatic account settlement screen 6021 from the screen in the display unit 47, and at the same time returns the color on the transaction screen 60 to normal from black so that the transaction screen 60 is set to be accessible.

In the case where an automatic account settlement is carried out, the client presses the automatic account settlement button 602 in such a state that the basket icon 6031 has been selected so that the above described critical amounts of money for the profit and the loss can be inputted on the automatic account settlement screen 6021 as the designated amounts. After that, the client presses the total account settlement button 66 within the basket bar label 6933 or 6943 in such a state where the same basket icon 6031 as the basket icon 6031 that has been selected when the automatic account settlement button 602 was pressed is selected.

The CPU 41 in the client terminal 40 corresponds the identification information on the basket transaction to the critical amounts of money (designated amounts of money) stored in the RAM 42 or on the hard disk 43 and transmits the identification information and the amounts of money to the FX server 30.

Here, the CPU 41 transmits only the identification information on the basket transaction to the FX server 30 in the case where the total account settlement button 66 is pressed in such a state where no critical amount of money has been set. In this case, the CPU 31 in the FX server 30 carries out an account settlement process in real time for all the positions of the basket transaction corresponding to the received identification information.

The CPU 31 in the FX server 30 carries out an account settlement process on the basket transaction that corresponds to the received identification information in response to each of the separate cases where only the critical amount of money for the profit has been set, only the critical amount of money for the loss has been set, and the critical amounts of money for the profit and the loss have been set.

The CPU 31 calculates the amount of the profit or the loss for each basket transaction at intervals of a certain amount of time starting when the execution information on the basket transaction is received from an LP server 10. In addition, the CPU 31 determines whether or not the profit or the loss of the basket transaction corresponding to the identification information received from the client terminal 40 has reached the received critical amount of money on the basis of the calculated amount of money for the profit or the loss at intervals of a certain period of time.

In the case where only the critical amount of money for the profit has been set, the CPU 31 carries out an account settlement process on a basket transaction when the profit for the basket transaction has reached the critical amount of money for the profit. In the case where only the critical amount of money for the loss has been set, the CPU 31 carries out an account settlement process on a basket transaction when the loss for the basket transaction has reached the critical amount of money for the loss. In the case where the critical amounts of money for the profit and the loss have been set, the CPU 31 carries out an account settlement process on a basket transaction when the profit or the loss for the basket transaction has reached the critical amount of money for the profit or the loss, whichever comes first.

Here, Fig 21 shows an example of a mode where the critical amount of money for the profit or the loss is designated in Japanese yen on the automatic account settlement screen 6021. However, the currency in which the critical amount of money for the profit or the loss is designated on the automatic account settlement screen 6021 is not limited to the Japanese yen. In addition, the currency in which the critical amount of money for the profit or the loss is designated on the automatic account settlement screen 6021 is not limited to the currency in which the client started the FX trade.

Even in the case where a client in Japan opened a transaction account in Japanese yen and starts FX trades for buying or selling U.S. dollars or Euros in the FX system 1, for example, the critical amount of money for designating on the automatic account settlement screen 6021 may be in Japanese yen. In this case, the CPU 31 in the FX server 30 calculates the values of the foreign currencies, such as U.S. dollars and Euros, to those of the Japanese yen in accordance with the exchange rates at that point in time for the calculation of the profit or the loss.

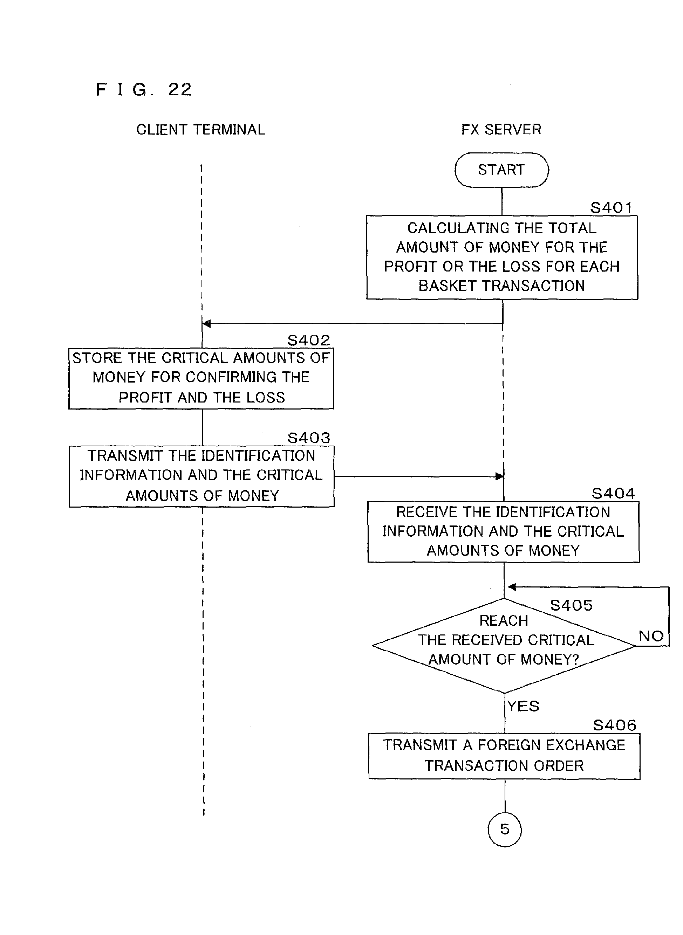

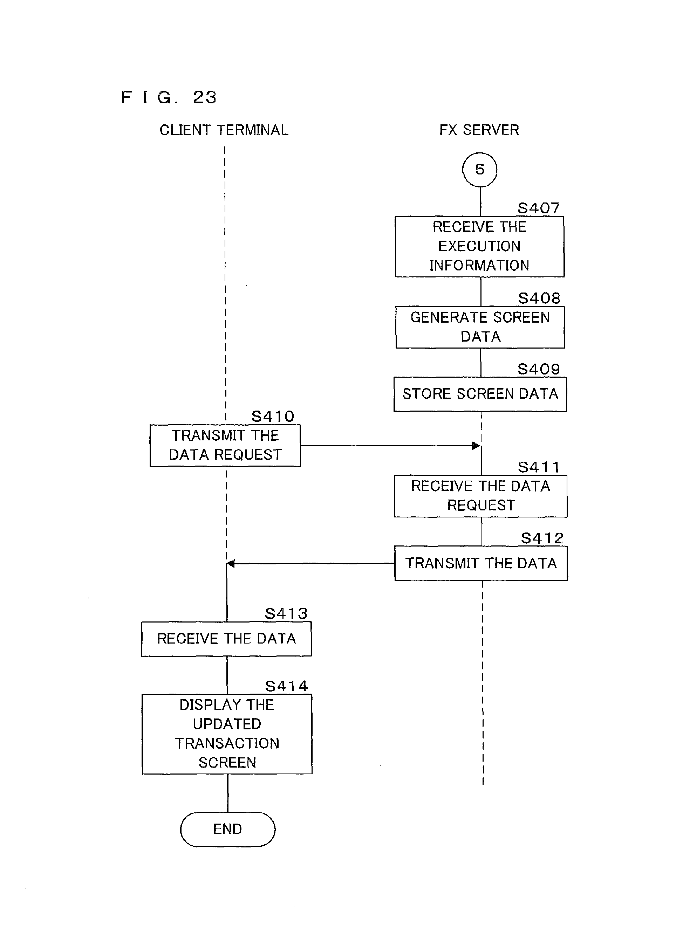

Figs 22 and 23 show a flow chart for illustrating an example of the procedure for an automatic account settlement process. Figs 22 and 23 do not show the procedures for the processes that are carried out in the LP servers 10 and the BO server 20. In the following, a case is described where a client designates the critical amounts of money for both the profit and the loss so that an automatic account settlement for an FX trade is carried out.

The CPU 31 in the FX server 30 starts a process for calculating the total amount of money for the profit or the loss for each basket transaction at intervals of a constant period of time (step S401). The CPU 31 repeatedly carries out the process in step S401 at intervals of a certain period of time until the account settlement for the basket transaction is completed on the basis of the execution information on the basket transaction and the exchange rates acquired minute by minute from the LP servers 10 via the BO server 20. The CPU 31 completes the process in step S401 concerning the basket transaction of which the account settlement has been completed at the point in time when the account settlement information is received from an LP server 10.

The CPU 41 in the client terminal 40 stores in the RAM 42 the critical amounts of money for confirming the profit and the loss that have been designated on the automatic account settlement screen 6021 (step S402). In the case where the total account settlement button 66 is pressed, the CPU 41 corresponds the identification information on the basket transaction that corresponds to the selected basket icon 6031 to the critical amounts of money for the profit and the loss that have been stored in the RAM 42 and transmits the identification information and the critical amounts of money for the profit and the loss to the FX server 30 (step S403).

The FX server 30 receives the identification information on the basket transaction and the critical amounts of money for the profit and the loss from the client terminal 40 (step S404). The CPU 31 in the FX server 30 determines whether or not the total amount of money for the profit or the loss that has been calculated in step S401 for the basket transaction that corresponds to the received identification information has reached the received critical amount of money for the profit or the loss (step S405). The CPU 31 returns the process to step S405 at intervals of a certain period of time in the case where the CPU 31 determines that the total amount of money for the profit or the loss for a basket transaction corresponding to the received identification information has not reached the received critical amount of money (NO in step S405).

In the case where the CPU 31 determines that the total amount of money for the profit or the loss for the basket transaction corresponding to the received identification information has reached the received critical amount of money (YES in step S405), the CPU 31 transmits the foreign exchange transaction orders for a bundled account settlement order to an LP server 10 via the BO server 20 (step S406). The process in step S406 is the foreign exchange transaction orders concerning either the profit confirmation or the loss confirmation in the basket transaction corresponding to the identification information received by the FX server 30. Therefore, the CPU 31 discards the other bundled account settlement process for either the profit confirmation or the loss confirmation that is not carried out in step S406.

The FX server 30 receives the execution information for the bundled account settlement order for the basket transaction from the LP server 10 via the BO server 20 (step S407). The CPU 31 in the FX server 30 generates data for the transaction screen 60 that includes the execution information on the bundled account settlement order for the received basket transaction (step S408). The execution information in step S408 includes distinguishing between the profit confirmation and the loss confirmation. The CPU 31 stores the generated data in the RAM 32 (step S409).

The CPU 41 in the client terminal 40 transmits a data request for updating the transaction screen 60 to the FX server 30 (step S410). The FX server 30 receives the data request from the client terminal 40 (step S411). The CPU 31 in the FX server 30 reads out the data that corresponds to the received data request from the RAM 32 and transmits the data that has been read out to the client terminal 40 (step S412). The client terminal 40 receives the data from the FX server 30 (step S413). The CPU 41 in the client terminal 40 uses the received data so as to display the updated transaction screen 60 in the display unit 47 (step S414) and completes the process.

In the case where the total amount of money of the profit and the loss for a plurality of currency pairs included in the basket transaction has reached the amount of money designated by the client, the FX system 1 allows an account settlement process for the positions in all of the currency pairs included in the basket transaction to be carried out collectively.

Conventional means for the client to place an order for an account settlement transaction in advance in an FX trade include a limit order and a stop loss order. The limit order is an order for carrying out an account settlement when the exchange rate for the U.S. dollar/Japanese yen, where the dollar is bought at 80 yen, for example, has risen to the preset rate (81 yen, for example) in order to confirm the profit. Conversely, the stop loss order is an order for carrying out an account settlement when the exchange rate has fallen to the preset rate (79 yen, for example) in order to confirm the loss. Thus, the limit order and the stop loss order are orders in a system where the preset exchange rates are conditions for carrying out either order.

In order for the client to confirm the profit or the loss by means of the limit order or the stop loss order, respectively, it is necessary for the client to set the exchange rate at the time of the account settlement for each currency pair that relates to the basket icon 6031 in the FX system 1. However, it is difficult for the client to predict in advance which currency pair relating to the basket icon 6031 will yield a profit or a loss and how much the profit or loss will be. In the case where the client misjudges the trend of the exchange rate, an opportunity for a profit may be lost or the amount of lost money may increase in the future. In addition, what is important for the client is not the loss or the profit in the unit of a currency pair, but the risk in the unit of a basket transaction or the amount of money of the possible profit.

In the FX system 1, the client selects one currency for an FX trade, and as a principle, the client is not aware of the currency pairs. Therefore, in the case where the total amount of money for the profit or the loss in the respective positions of the plurality of currency pairs included in a basket transaction has reached the amount of money designated by the client, a bundled account settlement is carried out for all the positions included in the basket transaction so that the client can easily avoid the risk and can increase the possibility of making a profit.

Embodiment 6

Embodiment 6 relates to a mode where the BO server 20 processes a foreign exchange transaction order that has been transmitted from a client terminal 40 and generates the execution information thereof. Therefore, the FX system 1 according to embodiment 6 does not include an LP server 10.

Here, in embodiment 6, the same reference numbers are attached to the same components as in embodiment 1 to embodiment 5, and the details thereof are not described.

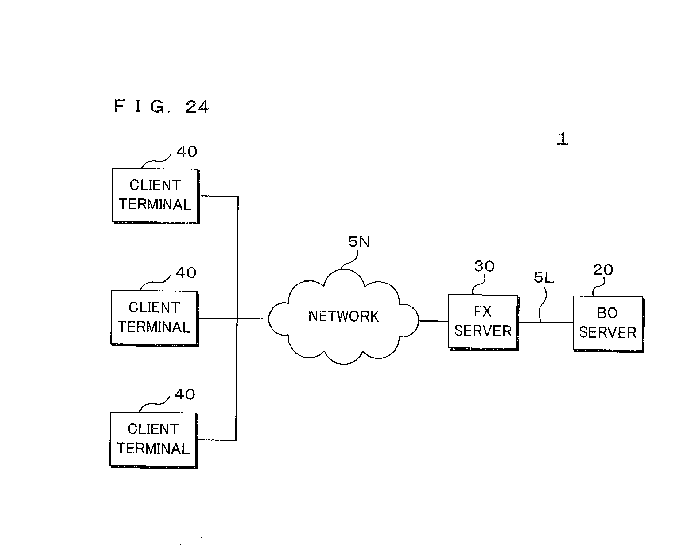

Fig 24 is a block diagram showing another example of the structure of the FX system 1. The FX system 1 includes a BO server 20, an FX server 30, and a plurality of client terminals 40, but does not include an LP server 10. The BO server 20 and the FX server 30 work together to transmit and receive information on the foreign exchange transactions to and from a client terminal 40. As a result, the FX dealer carries out an FX trade with a client.

Here, the BO server 20 is not connected to an LP server 10 that forms the foreign exchange market IF. Therefore, the BO server 20 generates one or more exchange rates at intervals of a certain period of time. The BO server 20 transmits the exchange rates that have been generated at intervals of a certain period of time to the FX server 30. The FX server 30 generates indices for indicating the strength of the individual currencies on the basis of the exchange rates that have been acquired from the outside in the same manner as in embodiment 1 to embodiment 5. The FX server 30 transmits the generated indices for the individual currencies to a client terminal 40 in response to a data request from the client terminal 40. The client terminal 40 uses the indices for the individual currencies that have been received from the FX server 30 so as to generate a chart 6911, for example, on the transaction screen 60. The client terminal 40 displays in the display unit 47 the transaction screen 60 with the generated chart 6911 being incorporated.

In the case where an FX order is received from a client terminal 40 via the FX server 30, the BO server 20 carries out a currency exchange transaction process on the basis of the exchange rates generated by the BO server 20. The BO server 20 generates the execution information and the account settlement information on the basis of the results of the FX trade. The BO server 20 transmits the generated execution information and the generated account settlement information to the FX server 30. The FX server 30 carries out a position management process and a profit or loss calculation process for the client at intervals of a constant period of time and stores the results in the RAM 32 or on the hard disk 33. In addition, in response to a data request from the client server 40, the FX server 30 transmits the data that corresponds to the requested data (including the profit or loss, the execution information, and the account settlement information) to the client terminal 40).

The disclosed embodiments are illustrative in all regards and are not limitative. The scope of the present invention is defined by the claims instead of the above descriptions and is intended to include the equivalence to the claims and all the modifications within the scope of the claims.

In addition, the technical features (constituent features) described in the respective embodiments can be combined with each other, and the combination can form a new technical feature. Explanation of Symbols

| 1 | FX system |
|---|---|
| 10 | LP server |
| 20 | BO server |
| 30 | FX server (Foreign exchange transaction apparatus, central apparatus) |
| 31 | CPU (Control unit, generating unit, calculating unit, profit/loss calculating unit, bundled account settlement unit, process implementation unit, central control unit) |
| 32 | RAM (memory unit) |
| 33 | Hard disk (memory unit) |
| 35 | Communication unit (transmitting unit, receiving unit, obtaining unit) |
| 36 | Timer (timing unit) |
| 301 | Communication unit (transmitting unit, receiving unit, obtaining unit) |
| 302 | Memory unit |
| 303 | Index calculation unit (calculating unit) |
| 304 | Screen information generation unit (generating unit) |
| 305 | Order processing unit (bundled account settlement unit, process implementation unit) |
| 306 | Profit/loss calculation unit |
| 40 | Client terminal (terminal apparatus) |
| 41 | CPU (terminal control unit, control unit) |
| 42 | RAM (memory unit) |
| 43 | Hard disk (memory unit) |
| 45 | Communication unit (receiving unit, transmitting unit) |
| 47 | Display unit |
| 48 | Operation unit |
| 401 | Communication unit |
| 402 | Memory unit |
| 403 | Screen generation unit |
| 404 | Chart pattern generation unit |
| 60 | Transaction screen |
| IF | Foreign exchange market |
| 3P | Program |
| 4P | Program |

**Claims**

1. A foreign exchange transaction apparatus having a control unit for processing information on a foreign exchange transaction of a plurality of currencies, **characterized by** comprising:

   a generating unit generating, by means of the control unit, screen information for selecting one currency from among a plurality of currencies and placing a bundled order of transactions where the selected currency and the other currencies are exchanged, respectively;
   a transmitting unit transmitting, by means of the control unit, the screen information generated by the generating unit to the outside; and
   a receiving unit receiving, by means of the control unit, order information on the bundled order from the outside.

2. The foreign exchange transaction apparatus according to Claim 1, **characterized in that**
   the generating unit generates screen information concerning a bundled account settlement order for closed trade of the bundled order, and
   the receiving unit receives order information on the bundled account settlement order from the outside.

**3.** The foreign exchange transaction apparatus according to Claim 1 or 2, **characterized in that**
the generating unit generates screen information for designating a critical amount of money of the entire profit/loss of the closed trade of the bundled order, and
the receiving unit receives the critical amount of money from the outside.

**4.** The foreign exchange transaction apparatus according to Claim 2 or 3, **characterized in that**
the generating unit generates screen information for designating the date and time when the processing on the bundled order or bundled account settlement order starts being carried out, and
the receiving unit receives the date and time when the processing starts being carried out from the outside.

**5.** The foreign exchange transaction apparatus according to Claim 3 or 4, further comprising:

an obtaining unit obtaining, by means of the control unit, foreign exchange rates of a plurality of currency pairs;
a storing unit storing, by means of the control unit, the foreign exchange rates obtained by the obtaining unit; and
a calculating unit calculating, by means of the control unit, an amount of fluctuations in the foreign exchange rate of each currency relative to all of the other currencies on the basis of each foreign exchange rate obtained and stored by the obtaining unit and storing unit, respectively, and the fluctuations in each foreign exchange rate stored by the storing unit at different points in time, wherein
the generating unit generates screen information for displaying the amounts of fluctuations in the foreign exchange rates calculated by the calculating unit for each currency.

**6.** The foreign exchange transaction apparatus according to Claim 5, further comprising
a profit/loss calculating unit calculating, by means of the control unit, the profit/loss of closed trade of the bundled order received by the receiving unit for each currency pair using the foreign exchange rates obtained by the obtaining unit, wherein
the generating unit generates screen information for displaying the profit/loss calculated by the profit/loss calculating unit.

**7.** The foreign exchange transaction apparatus according to Claim 6, wherein
the profit/loss calculating unit calculates the total profit/loss of the closed trade of the bundled order, and
the foreign exchange transaction apparatus further comprises a bundled account settlement unit carrying out, by means of the control unit, a bundled account settlement process on the closed trade of the bundled order in the case where the total profit/loss calculated by the profit/loss calculating unit reaches the critical amount of money received by the receiving unit.

**8.** The foreign exchange transaction apparatus according to Claim 4, further comprising:

a timing unit timing the date and time; and
a process implementation unit carrying, by means of the control unit, a bundled order process or a bundled account settlement order process received by the receiving unit in the case where the date and time timed by the timing unit reaches the date and time received by the receiving unit when the process starts being carried out.

**9.** The foreign exchange transaction apparatus according to Claim 6 or 7, **characterized in that**
the generating unit generates screen information for displaying an animation image showing the profit/loss calculated by the profit/loss calculating unit.

**10.** The foreign exchange transaction apparatus according to any of Claims 5 to 7, **characterized in that**
the calculating unit calculates, as the amounts of fluctuations in the foreign exchange rates, an arithmetic average value of logarithms of the rates of change in the foreign exchange rates of each currency relative to the other currencies.

**11.** A foreign exchange transaction system, comprising a central apparatus and a terminal apparatus for transmitting and receiving information on foreign exchange transactions of a plurality of currencies to and from each other, **characterized in that**
the central apparatus comprises:

a central control unit for processing information;
a generating unit generating, by means of the central control unit, screen information for selecting one currency from among a plurality of currencies and for placing a bundled order where the selected currency is exchanged with the other currencies, respectively; and

a transmitting unit transmitting, by means of the central control unit, the screen information generated by the generating unit to the terminal apparatus,

the terminal apparatus comprises:

a terminal control unit processing information;

a receiving unit receiving, by means of the terminal control unit, the screen information from the central apparatus;

a display unit displaying, by means of the terminal control unit, the screen in response to the screen information received by the receiving unit;

an operation unit for placing a bundled order on the screen displayed by the display unit; and

a transmitting unit transmitting, by means of the terminal control unit, order information for the bundled order placed through the operation unit to the central apparatus, and

the central apparatus has a receiving unit receiving, by means of the central control unit, the order information for the bundled order transmitted by the transmitting unit in the terminal apparatus.

12. The foreign exchange transaction system according to Claim 11, **characterized in that**

the generating unit in the central apparatus generates screen information for placing a bundled account settlement order of the closed trade of the bundled order,

the transmitting unit in the central apparatus transmits the screen information for placing a bundled account settlement order generated by the generating unit to the terminal apparatus,

the receiving unit in the terminal apparatus receives screen information for the bundled account settlement order from the central apparatus,

the display unit in the terminal apparatus displays a screen concerning the bundled account settlement order of the screen information received by the receiving unit,

the operating unit in the terminal apparatus makes a bundled account settlement order possible on the screen displayed on the display unit,

the transmitting unit in the terminal apparatus transmits the order information for the bundled account settlement order placed through the operating unit to the central apparatus, and

the receiving unit in the central apparatus receives the order information for the bundled account settlement order transmitted by the transmitting unit in the terminal apparatus.

13. A transmission/reception method for transmitting and receiving information corresponding to foreign exchange transactions of a plurality of currencies between an information processing apparatus having a control unit and outside, **characterized by** comprising the steps of:

the control unit generating screen information for selecting one currency from among a plurality of currencies and for placing a bundled order where the selected currency is exchanged with the other currencies, respectively;

the control unit transmitting the generated screen information to the outside; and

the control unit receiving the order information for the bundled order from the outside.

14. A computer program to cause a computer having a control unit to carry out an information process on foreign exchange transactions of a plurality of currencies, the computer program comprising the steps of:

calculating amounts of fluctuations in the foreign exchange rates of each currency relative to all the other currencies on the basis of the fluctuations in the foreign exchange rate of each currency pair at different points in time, by means of the control unit; and

generating screen information for displaying the calculated amounts of fluctuations in the foreign exchange rates of the respective currencies, for selecting one currency from among the plurality of currencies, and for placing a bundled order where the selected currency is exchanged with the other currencies, respectively, by means of the control unit.

15. The computer program according to Claim 14, further comprises the steps of:

transmitting the generated screen information to the outside by means of the control unit,

receiving the order information for the bundled order from the outside by means of the control unit,

calculating the profit/loss of the closed trade of the received bundled order for each currency pair using the foreign exchange rate of the currency pair by means of the control unit, and
the control unit generating the screen information for displaying the calculated profit/loss by means of the control unit.

16. The program according to Claim 14 or 15, **characterized in that**
generating the screen information concerning a bundled account settlement order of the closed trade of the bundled order is generated by means of the control unit,
transmitting the screen information concerning the generated bundled account settlement order to the outside by means of the control unit, and
receiving the order information for the bundled account settlement order from the outside by means of the control unit.

17. A computer program to cause a computer having a control unit, a memory unit, a display unit and an operation unit to carry out an information process on foreign exchange transactions of a plurality of currencies, the computer program comprising the steps of:

receiving, by means of the control unit, screen information for displaying the amounts of fluctuations in the foreign exchange rates of each currency relative to all the other currencies that have been calculated on the basis of the fluctuations in the foreign exchange rate of each currency pair at different points in time, for selecting one currency from among the plurality of currencies, and for placing a bundled order where the selected currency is exchanged with the other currencies, respectively, from the outside;
displaying a screen in response to the received screen information on the display unit, by means of the control unit,;
accepting a bundled order placed on the screen displayed on the display unit using the operation unit from the operation unit, by means of the control unit; and
transmitting order information for the received bundled order to the outside, by means of the control unit.

18. The computer program according to Claim 17, further comprises the steps of:

receiving the screen information concerning a bundled account settlement order of the closed trade of the bundled order from the outside by means of the control unit,
displaying a screen concerning the bundled account settlement order in response to the received screen information on the display unit by means of the control unit,
accepting the bundled account settlement order placed on the screen displayed on the display unit using the operation unit from the operation unit by means of the control unit, and
transmitting the order information for the received bundled account settlement order to the outside by means of the control unit.

19. The computer program according to Claim 17 or 18, further comprises the steps of:

receiving the amounts of fluctuations in the foreign exchange rates of each currency relative to all the other currencies that have been calculated on the basis of the fluctuations of the foreign exchange rates of each currency pair at different points in time from the outside by means of the control unit,
storing the received amounts of fluctuations in the foreign exchange rates for each currency in the memory unit by means of the control unit, and
generating a chart that shows for each currency the fluctuations in the received amounts of fluctuations in the foreign exchange rates or in the amounts of fluctuations in the foreign exchange rates stored in the memory unit by means of the control unit.

20. The computer program according to Claim 19, further comprises the steps of:

generating a chart pattern that has been classified or simplified from the fluctuations in the amounts of fluctuations in the foreign exchange rates stored in the memory unit for each currency by means of the control unit, and
generating a plurality of information symbolizing diagrams for displaying the generated chart patterns and the received amounts of fluctuations in the foreign exchange rates corresponding to the plurality of currencies, respectively, by means of the control unit.

EP 2 849 144 A1

EP 2 849 144 A1

F I G. 3

F I G. 4A

/ 30

**FX SERVER**

/ 302
MEMORY UNIT

/ 301
COMMUNICATION UNIT

/ 20
BO SERVER

/ 303
INDEX CALCULATION UNIT

/ 304
SCREEN INFORMATION GENERATION UNIT

/ 40
CLIENT TERMINAL

/ 306
PROFIT/LOSS CALCULATION UNIT

/ 305
ORDER PROCESSING UNIT

F I G. 4B

/ 40

**CLIENT TERMINAL**

/ 402
MEMORY UNIT

/ 401
COMMUNICATION UNIT

/ 30
FX SERVER

/ 404
CHART PATTERN GENERATION UNIT

/ 403
SCREEN GENERATION UNIT

F I G. 5

```
                    ┌──────────┐
                    │  START   │
                    └────┬─────┘
                         │
        ┌────────────────────────────┐
        │    SET THE POINT IN TIME OF │ S101
        │    THE START OF CALCULATION │
        └────────────────┬───────────┘
                         │
        ┌────────────────────────────┐
        │ READ OUT THE EXCHANGE RATE  │ S102
        │    AT THE POINT IN TIME OF  │
        │   THE START OF CALCULATION  │
        └────────────────┬───────────┘
                         │
        ┌────────────────────────────┐
        │ READ OUT THE EXCHANGE RATE  │ S103
        │  AT THE MOST RESENT POINT   │
        └────────────────┬───────────┘
                         │
        ┌────────────────────────────┐
        │     CALCULATE THE INDEX     │ S104
        └────────────────┬───────────┘
                         │
        ┌────────────────────────────┐
        │      WRITE IN THE INDEX     │ S105
        └────────────────┬───────────┘
                         │
        ┌────────────────────────────┐
        │      OUTPUT THE INDEX       │ S106
        └────────────────┬───────────┘
                         │
                    ┌────┴─────┐
                    │   END    │
                    └──────────┘
```

EP 2 849 144 A1

# FIG. 6

TRANSACTION SCREEN — 61

SIZE OF BUYING/SELLING — 63

10
x60000 currency

BUY — 64

SELL — 65

TOTAL ACCOUNT SETTLEMENT — 66

62, 68

Waiting. — 67

THE MARGIN BALANCE (Yen):2654226.86
THE RATE OF MARGIN USAGE(%):0
PROFIT/LOSS (PIPs):0.0
PROFIT/LOSS (Yen):0

68

| 78 | 0 | 82 | 13 | 52 | 97 | 89 |
|----|---|----|----|----|----|----|
| USD | EUR | JPY | CHF | GBP | AUD | CAD |

68

6913
691 — CHART1
692 — CHART2
693 — PROFIT /LOSS
694 — POSITION
695 — LIVE REPORT

STANDARD SELECTED CURRENCY BASE — 6914

69

6911

--- AUD
— CAD
--- JPY
--- USD
--- GBP
— CHF
--- EUR

12/06 14:00 12/06 16:00 12/06 18:00 12/06 20:00 12/06 22:00 12/07 00:00 12/07 02:00 12/07 04:00 12/07 06:00 12/07 08:00 12/07 10:00 12/07 12:00

6912

PERIOD 24HOURS

TRANSACTION SCREEN

61

62  62  68

63  64  65  66  67  60

SIZE OF BUYING/ SELLING

10

×60000 currency

BUY

SELL

TOTAL ACCOUNT SETTLEMENT

Waiting.

THE MARGIN BALANCE (Yen):2654227.89
THE RATE OF MARGIN USAGE(%):0
PROFIT/LOSS (PIPs):0.0
PROFIT/LOSS (Yen):0

68

| 78 | 0 | 82 | 13 | 52 | 97 | 89 |
|---|---|---|---|---|---|---|
| USD | EUR | JPY | CHF | GBP | AUD | CAD |

68

6913
691  CHART1
692  CHART2
693  PROFIT /LOSS
694  POSITION
695  LIVE REPORT

STANDARD SELECTED CURRENCY BASE  6914

69
6911

---- JPY
--- EUR
--- GBP
— CHF
--- USD
— CAD
--- AUD

13:40:00 13:45:00 13:50:00 13:55:00 14:00:00 14:05:00 14:10:00 14:15:00 14:20:00 14:25:00 14:30:00 14:35:00

6912

PERIOD  24HOURS

EP 2 849 144 A1

# FIG. 8

TRANSACTION SCREEN

61

62

62  68

SIZE OF BUYING/ SELLING

10
×60000 currency

BUY

SELL

TOTAL ACCOUNT SETTLEMENT

Waiting.

THE MARGIN
BALANCE (Yen):2654226.98
THE RATE OF
MARGIN USAGE(%):0
PROFIT/LOSS (PIPs):0.0
PROFIT/LOSS (Yen):0

68

| 78 | 0 | 82 | 13 | 52 | 97 | 89 |
|----|---|----|----|----|----|----|
| USD | EUR | JPY | CHF | GBP | AUD | CAD |

68

691  CHART1
692  CHART2
693  PROFIT /LOSS
694  POSITION
695  LIVE REPORT

69
6921

--- AUD
— CHF
--- EUR
--- GBP
--- USD
— CAD
--- JPY

12/07 08:00  12/07 10:00  12/07 12:00

6922

PERIOD  24HOURS

EP 2 849 144 A1

FIG. 9

TRANSACTION SCREEN

61

62    63    64    65    66    67    60

SIZE OF
BUYING/
SELLING

10

×60000
currency

BUY

SELL

TOTAL
ACCOUNT
SETTLEMENT

Transaction
in progress.

THE MARGIN
BALANCE (Yen):2651212.56
THE RATE OF
MARGIN USAGE(%):19
PROFIT/LOSS (PIPs):3.1
PROFIT/LOSS (Yen):3104

62  68

68

78    0    82    13    52    97    89
USD   EUR  JPY  CHF  GBP  AUD  CAD

68

69

UNIT:Yen

6931

691  CHART1
692  CHART2
693  PROFIT
     /LOSS
694  POSITION
695  LIVE
     REPORT

3000

2100.0

2000

900.0

704.0

1000

300.0

0

-200.0

-400.0

-1000

-2000

-3000

AUD/JPY   CAD/JPY   EUR/JPY   GBP/JPY   CHF/JPY   USD/JPY

ACCOUNT   ACCOUNT   ACCOUNT   ACCOUNT   ACCOUNT   ACCOUNT
SETTLEMENT SETTLEMENT SETTLEMENT SETTLEMENT SETTLEMENT SETTLEMENT

6932

EP 2 849 144 A1

FIG. 10

**TRANSACTION SCREEN** — 61, 62, 63, 64, 65, 66, 67, 60

SIZE OF BUYING/SELLING: `10` × 60000 currency

BUY | SELL | TOTAL ACCOUNT SETTLEMENT

Transaction in progress.
MARGIN BALANCE (Yen):2650511.92
RATE OF MARGIN USAGE(%):19
PROFIT/LOSS (PIPs):2.1
PROFIT/LOSS (Yen):2014

| 78 | 0 | 82 | 13 | 52 | 97 | 89 |
|----|---|----|----|----|----|----|
| USD | EUR | JPY | CHF | GBP | AUD | CAD |

691 CHART1
692 CHART2
693 PROFIT/LOSS
694 POSITION
695 LIVE REPORT

| CURRENCY PAIR | BID | ASK | STATUS | PROFIT/LOSS (PIPs) | PROFIT/LOSS (Yen) | INDIVIDUAL ACCOUNT SETTLEMENT |
|---|---|---|---|---|---|---|
| AUD/JPY | 86.411 | 86.426 | OPENED | 2.1 | 2100 | ACCOUNT SETTLEMENT |
| CAD/JPY | 83.173 | 83.19 | OPENED | 0.9 | 900 | ACCOUNT SETTLEMENT |
| EUR/JPY | 106.942 | 106.958 | OPENED | −0.2 | −200 | ACCOUNT SETTLEMENT |
| GBP/JPY | 132.381 | 132.405 | OPENED | −0.3 | −296 | ACCOUNT SETTLEMENT |
| CHF/JPY | 88.457 | 88.479 | OPENED | −0.4 | −400 | ACCOUNT SETTLEMENT |
| USD/JPY | 82.465 | 82.471 | CLOSED | 0.3 | 300 | ACCOUNT SETTLEMENT |

69, 6941, 6942

EP 2 849 144 A1

EP 2 849 144 A1

FIG. 11

TRANSACTION
SCREEN

61

62

62 68

63

SIZE OF
BUYING/
SELLING

10

x60000
currency

64

BUY

65

SELL

66

TOTAL
ACCOUNT
SETTLEMENT

67

60

Transaction
in progress.

MARGIN
BALANCE (Yen):2650512.35
RATE OF
MARGIN USAGE(%):19
PROFIT/LOSS (PIPs) :2.0
PROFIT/LOSS (Yen) :2004

68

78
USD

0
EUR

82
JPY

13
CHF

52
GBP

97
AUD

89
CAD

68

69

691 — CHART1

692 — CHART2

693 — PROFIT
/LOSS

694 — POSITION

695 — LIVE
REPORT

6951

6952

6953

6954

F I G.  12

| CLIENT TERMINAL | FX SERVER | LP SERVER |
|---|---|---|

START

S201
CALCULATE
THE INDEX

S202
GENERATE
SCREEN DATA

S203
STORE SCREEN DATA

S204
TRANSMIT THE DATA
REQUEST

S205
RECEIVE THE DATA
REQUEST

S206
TRANSMIT THE DATA

S207
RECEIVE THE DATA

S208
DISPLAY
THE UPDATED
TRANSACTION
SCREEN

1

F I G. 13

RECEIVE A BUNDLED
ORDER

FX SERVER

LP SERVER

( 1 )

S209
RECEIVE A BUNDLED
ORDER

S210
TRANSMIT THE
BUNDLED ORDER

S211
RECEIVE THE
BUNDLED ORDER

S212
TRANSMIT A FOREIGN
EXCHANGE
TRANSACTION ORDER

S213
RECEIVE THE FOREIGN
EXCHANGE
TRANSACTION ORDER

S214
TRANSMIT
THE EXECUTION
INFORMATION

S215
RECEIVE
THE EXECUTION
INFORMATION

( 2 )

45

FIG. 14

| CLIENT TERMINAL | FX SERVER | LP SERVER |
|---|---|---|

②

**S216**
CALCULATE THE
PROFIT/LOSS

**S217**
GENERATE SCREEN
DATA DURING THE
TRANSACTION

**S218**
STORE SCREEN DATA

**S219**
TRANSMIT THE DATA
REQUEST

**S220**
RECEIVE THE DATA
REQUEST

**S221**
TRANSMIT THE DATA

**S222**
RECEIVE THE DATA

**S223**
DISPLAY
THE UPDATED
TRANSACTION
SCREEN

END

FIG. 15

TRANSACTION SCREEN

| 62 | 63 SIZE OF BUYING/SELLING | 601 TIME SETTING | 602 AUTOMATIC ACCOUNT SETTLEMENT | 64 BUY | 65 SELL | 67 | 60 |

61

◯

61

SIZE OF BUYING/SELLING
10
×60000 currency

Transaction in progress.

MARGIN BALANCE (Yen):2645802
RATE OF MARGIN USAGE(%):4
PROFIT/LOSS (PIPs):2615959
PROFIT/LOSS (Yen):2622289

68

| 85 USD | 26 EUR | 180 JPY | 0 CHF | 43 GBP | 84 AUD | 71 CAD |

TRANSACTION GROUP 603
BUY  SELL 6031

604
FORCED COMPLETION

6933
TOTAL ACCOUNT SETTLEMENT

TRANSACTION GROUP :1358324414407   SELECTED CURRENCY :JPY   SELL or BUY :SELL   TOTAL PROFIT/LOSS :650

691 CHART1
692 CHART2
693 PROFIT /LOSS
694 POSITION
695 LIVE REPORT

UNIT:Yen
66
69
6931

```
1000.00
 666.67
 333.33
   0.00
-333.33
-666.67
-1000.00
```

160.0    60.0    50.0    260.0          340.0
                                -220.0

AUD/JPY   CAD/JPY   EUR/JPY   GBP/JPY   CHF/JPY   USD/JPY

ACCOUNT SETTLEMENT  ACCOUNT SETTLEMENT  ACCOUNT SETTLEMENT  ACCOUNT SETTLEMENT  ACCOUNT SETTLEMENT  ACCOUNT SETTLEMENT

6932

EP 2 849 144 A1

FIG. 16

TRANSACTION SCREEN

62  63  601  602  64  65  67  60

SIZE OF BUYING/SELLING

10
×60000 currency

TIME SETTING | AUTOMATIC ACCOUNT SETTLEMENT | BUY | SELL

61

62

Transaction in progress.

MARGIN BALANCE (Yen):2645802
RATE OF MARGIN USAGE(%):4
PROFIT/LOSS (PIPs) :2615959
PROFIT/LOSS (Yen) ::2622099

68  68  68  68  68  68  6031  603

| 86 | 0 | 174 | 13 | 42 | 84 | 72 |
|----|---|-----|----|----|----|----|
| USD | EUR | JPY | CHF | GBP | AUD | CAD |

TRANSACTION GROUP

BUY | SELL  6031

604

6943

FORCED COMPLETION

TRANSACTION GROUP:1358324414407   SELECTED CURRENCY:JPY   SELL or BUY:SELL   TOTAL PROFIT/LOSS:810   TOTAL ACCOUNT SETTLEMENT

69

66

691 CHART1
692 CHART2
693 PROFIT /LOSS
694 POSITION
695 LIVE REPORT

6941

| CURRENCY PAIR | STATUS | PROFIT /LOSS (PIPs) | PROFIT /LOSS (Yen) | INDIVIDUAL ACCOUNT SETTLEMENT |
|---|---|---|---|---|
| EUR/JPY | OPENED | – | 210.0 | ACCOUNT SETTLEMENT |
| AUD/JPY | OPENED | – | 20.0 | ACCOUNT SETTLEMENT |
| GBP/JPY | OPENED | – | 50.0 | ACCOUNT SETTLEMENT |
| CAD/JPY | OPENED | – | 260.0 | ACCOUNT SETTLEMENT |
| NZD/JPY | OPENED | – | –80.0 | ACCOUNT SETTLEMENT |
| USD/JPY | OPENED | – | 350.0 | ACCOUNT SETTLEMENT |

6942

FIG. 17

A

TIME SETTING ~6011
6012
☐ START
OPTION    6013 ⊞~6014
☐ COMPLETION
OPTION    ⊞~6017
                      6019
6015      6016    6018~ CONFIRM  CLOSE

B

TIME SETTING ~6011

☐ START
OPTION    ⊞

☐ COMPLETION
OPTION    ⊞    605

< Jan. 2013 >
SUN MON TUE WED THU FRI SAT
30  31   1   2   3   4   5
 6   7   8   9  10  11  12
13  14  15 [16] 17  18  19
20  21  22  23  24  25  26
27  28  29  30  31   1   2
 3   4   5   6   7   8   9
6051~                    🕐

C

TIME SETTING ~6011

☐ START
OPTION    ⊞

☐ COMPLETION
OPTION    ⊞    606

                    ⊞~6061
              ⌃      ⌃      ⌃
             17  :  13  :  44
              ⌄      ⌄      ⌄

F I G.  18

CLIENT TERMINAL                    FX SERVER

START

S301

STORE THE START
AND COMPLETION
DATE AND TIME

S302

RECEIVE A BUNDLED
ORDER

S303

TRANSMIT THE
BUNDLED ORDER AND
THE DATE AND TIME

S304

RECEIVE THE BUNDLED
ORDER AND THE
DATE AND TIME

S305

REACH
THE START DATE AND
TIME?

NO

YES

S306

TRANSMIT A FOREIGN
EXCHANGE
TRANSACTION ORDER

S307

RECEIVE
THE EXECUTION
INFORMATION

S308

GENERATE
SCREEN DATA

3

F I G. 19

CLIENT TERMINAL                    FX SERVER

③

S309
STORE SCREEN DATA

S310
TRANSMIT THE
DATA REQUEST

S311
RECEIVE THE DATA
REQUEST

S312
TRANSMIT THE DATA

S313
RECEIVE THE DATA

S314
DISPLAY THE
UPDATED
TRANSACTION
SCREEN

S315
REACH THE
COMPLETION DATE
AND TIME?        NO

YES  S316
TRANSMIT A FOREIGN
EXCHANGE
TRANSACTION ORDER

S317
RECEIVE THE
EXECUTION
INFORMATION

S318
GENERATE SCREEN
DATA

④

F I G. 20

CLIENT TERMINAL                          FX SERVER

④

S319
STORE SCREEN DATA

S320
TRANSMIT THE
DATA REQUEST

S321
RECEIVE THE DATA
REQUEST

S322
TRANSMIT THE DATA

S323
RECEIVE THE DATA

S324
DISPLAY
THE UPDATED
TRANSACTION
SCREEN

END

F I G. 2 1

6021

AUTOMATIC ACCOUNT SETTLEMENT

6022
☐ FIX
PROFIT
6023

If the total profit of the transaction group reaches [          ] (Yen), carry out the account settlement for a basket transaction automatically.

6024
☐ STOP
LOSS
6025

If the total loss of the transaction group reaches [          ] (Yen), carry out the account settlement for a basket transaction automatically.

*Your profit may not be realized at your designated amount.

6026    6027

[CONFIRM]  [CLOSE]

# F I G. 22

CLIENT TERMINAL                                    FX SERVER

( START )

**S401**
CALCULATING THE TOTAL
AMOUNT OF MONEY FOR THE
PROFIT OR THE LOSS FOR EACH
BASKET TRANSACTION

**S402**
STORE THE CRITICAL AMOUNTS OF
MONEY FOR CONFIRMING THE
PROFIT AND THE LOSS

**S403**
TRANSMIT THE IDENTIFICATION
INFORMATION AND THE CRITICAL
AMOUNTS OF MONEY

**S404**
RECEIVE THE IDENTIFICATION
INFORMATION AND THE CRITICAL
AMOUNTS OF MONEY

**S405**
REACH
THE RECEIVED CRITICAL
AMOUNT OF MONEY?          NO

YES

**S406**
TRANSMIT A FOREIGN EXCHANGE
TRANSACTION ORDER

( 5 )

F I G. 23

| CLIENT TERMINAL | FX SERVER |
|---|---|

⑤

S407
RECEIVE THE EXECUTION INFORMATION

S408
GENERATE SCREEN DATA

S409
STORE SCREEN DATA

S410
TRANSMIT THE DATA REQUEST

S411
RECEIVE THE DATA REQUEST

S412
TRANSMIT THE DATA

S413
RECEIVE THE DATA

S414
DISPLAY THE UPDATED TRANSACTION SCREEN

END

F I G. 24

1

```
┌──────────┐
│  CLIENT  │ 40
│ TERMINAL │
└──────────┘

┌──────────┐
│  CLIENT  │ 40
│ TERMINAL │
└──────────┘

┌──────────┐
│  CLIENT  │ 40
│ TERMINAL │
└──────────┘
```

5N

NETWORK

30

┌──────────┐
│    FX    │
│  SERVER  │
└──────────┘

5L

20

┌──────────┐
│    BO    │
│  SERVER  │
└──────────┘

## INTERNATIONAL SEARCH REPORT

| International application No. |
|---|
| PCT/JP2014/056596 |

| A. CLASSIFICATION OF SUBJECT MATTER |
|---|
| G06Q40/04(2012.01)i |
| |
| According to International Patent Classification (IPC) or to both national classification and IPC |

| B. FIELDS SEARCHED |
|---|
| Minimum documentation searched (classification system followed by classification symbols) |
| G06Q40/04 |
| |
| |

| Documentation searched other than minimum documentation to the extent that such documents are included in the fields searched |
|---|
| Jitsuyo Shinan Koho        1922–1996   Jitsuyo Shinan Toroku Koho   1996–2014 |
| Kokai Jitsuyo Shinan Koho  1971–2014   Toroku Jitsuyo Shinan Koho   1994–2014 |

| Electronic data base consulted during the international search (name of data base and, where practicable, search terms used) |
|---|
| ProQuest Computing(ProQuest) |

C. DOCUMENTS CONSIDERED TO BE RELEVANT

| Category* | Citation of document, with indication, where appropriate, of the relevant passages | Relevant to claim No. |
|---|---|---|
| A | JP 2010-152801 A  (FXCM Japan Inc.), 08 July 2010 (08.07.2010), paragraph [0050] (Family: none) | 1-20 |
| A | Daiwa FX (Gaikoku Kawase Shokokin Torihiki) Otoriatsukai Shohin Help & Manual Chumon/Zen Kessai Chumon Ikkatsu Kessai Chumon, [online], Daiwa Securities Co., Ltd., 26 June 2009 (26.06.2009), [retrieval date 17 April 2014 (17.04.2014)], Internet | 1-20 |
| A | JP 2012-027513 A  (Win-Invest Japan Inc.), 09 February 2012 (09.02.2012), claim 1 & WO 2010/0113221 A1 | 1-20 |

| ☐  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 April, 2014 (17.04.14) | 27 May, 2014 (27.05.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010058439 A

- JP 2009217796 A